# EUROPEAN PATENT SPECIFICATION

(11) **EP 4 007 222 B1**
(45) Date of publication and mention of the grant of the patent: **26.02.2025**
(21) Application number: 20848665.4
(22) Date of filing: 22.06.2020
(51) Int. Cl.: H04L 45/302, H04W 40/12

(54) **METHOD AND DEVICE FOR REALIZING SIGNALING ROUTE IN RICH COMMUNICATION**
VERFAHREN UND VORRICHTUNG ZUR REALISIERUNG EINER SIGNALISIERUNGSROUTE IN EINER RICH-KOMMUNIKATION
PROCÉDÉ ET DISPOSITIF PERMETTANT DE RÉALISER UN ITINÉRAIRE DE SIGNALISATION DANS UNE COMMUNICATION RICHE

(30) Priority: 29.07.2019 CN 201910691349
(43) Date of publication of application: 01.06.2022
(73) Proprietor: ZTE Corporation, Shenzhen, Guangdong 518057 (CN)
(72) Inventor: ZHANG, Lu, Shenzhen, Guangdong 518057 (CN); WANG, Mengxiao, Shenzhen, Guangdong 518057 (CN); ZHOU, Xiaojun, Shenzhen, Guangdong 518057 (CN); YAN, Zhimin, Shenzhen, Guangdong 518057 (CN); LI, Guanjun, Shenzhen, Guangdong 518057 (CN); LI, Aijun, Shenzhen, Guangdong 518057 (CN)
(74) Representative: Pennacchio, Salvatore Giovanni
(86) International application number: PCT/CN2020/097538
(87) International publication number: WO 2021/017686

(56) References cited:
- EP-A1- 2 380 338
- CN-A- 101 518 015
- CN-A- 101 998 374
- CN-A- 103 250 388
- CN-A- 109 274 583
- US-A1- 2014 134 978

## Description

### Technical Field

Embodiments of the present application relate to, but are not limited to, the field of communications technologies, and in particular, to a method and device for realizing signaling routing in rich communication.

### Background

An IMS (Interment Protocol Multimedia Subsystem) is a subsystem proposed by the 3GPP (Third Generation Partnership Project) and supporting an IP (Interment Protocol) multimedia service, and is a development trend of multimedia communication. As an application subsystem in the 4G (fourth generation mobile communication technology) era, the IMS can well satisfy requirements of communication between users in the 4G era. A prominent feature of the IMS is that the IMS adopts an SIP (Session Initial Protocol) system, communication is irrelevant to an access mode, and the IMS supports a plurality of capabilities, such as separation of control functions and bearing capabilities for a plurality of multimedia services, separation of calls and sessions, separation of applications and services, separation of services and networks, and fusion of services of a mobile network and an Internet.

An RCS (Rich Communication Suite) is a technical standard that is planned by the GMSA (Global System For Mobile Communications Association) and built above an IMS network, and has a unified service set definition. The RCS is a general name for implementing multimedia services such as voice, message and presence based on a mobile phone directory, and is an upgrade of base communication services of operators.

The GSMA releases an UP1.0 standard in 2016, where UP stands for Universal Profile (universal service form, universal technology implementation and universal interface definition) which is the latest RCS standard for achieving intercommunication between global operators, and the purpose is to help the global operators to have universal standards and promote interconnection and intercommunication and popularization of User Equipment (UE). The GSMA releases an UP2.0 version with the core function of MaaP (Messaging as a Platform) in 2017, which will form an application entry of a next generation A2P (Agent service to Production of consumer) industry of the operators.

The message service in the RCS is greatly different from a traditional audio/video service. A relatively stable interaction relationship is generally established between an RCS AS (Application Server) and a UE, and there is no excessive service nesting in a message service, therefore an IMS service trigger mechanism and signaling routing of a related audio/video service are too long for a message service, resulting in greatly increased service volume of core network devices such as an S-CSCF (Serving Call Session Control Function), which is not beneficial for the development of the message service.
EP2380338A1 discloses a method and node for setting up a call from a non-IMS telecommunication network. However, the above problem still remains unsolved.

### Summary

Embodiments of the present application provide a method and device for realizing signaling routing in rich communication, which can reduce signaling routing and system overhead in rich communication.

The present application is set out in the appended set of claims.

In the embodiments of the present application, a CSCF acquires fast route information according to a service triggering situation, determines a fast route relationship between service information and the fast route information, and pushes the fast route relationship to a corresponding SBC or RCS AS. The SBC or RCS AS searches, in a fast route relationship, for fast route information matching a received service request or a received service response, and forwards the service request or the service response according to the found fast route information. The embodiments of the present application add the mechanisms of establishing, maintaining and transferring a fast route relationship in IMS networks, and implement fast routing on devices such as an RCS AS and an SBC, thereby greatly improving the routing efficiency of an RCS service in an IMS network, and reducing signaling routing and system overhead.

### Brief Description of the Drawings

The accompanying drawings are used for providing a further understanding of the technical solutions of the embodiments of the present application, constitute a part of the description, and are used for explaining the technical solutions of the present application together with the embodiments of the present application, but do not constitute a limitation to the technical solutions of the present application.
Fig. 1 is a schematic diagram of implementation architecture according to some embodiments of the present application;
Fig. 2 is a flowchart of a method for realizing signaling routing in rich communication according to some embodiments of the present application;
Fig. 3 is an exemplary flowchart of an originating UE initiating a service request according to some embodiments of the present application;
Fig. 4 is another exemplary flowchart of a method for realizing signaling routing in rich communication according to some embodiments of the present application;
Fig. 5 is an exemplary flowchart of a terminating side initiating a service request to a terminating UE according to some embodiments of the present application;
Fig. 6 is an exemplary flowchart of implementing fast routing between different RCS ASs in the same network according to some embodiments of the present application;
Fig. 7 is an exemplary flowchart of implementing fast routing between different networks according to some embodiments of the present application;
Fig. 8 is another exemplary flowchart of a method for realizing signaling routing in rich communication according to some embodiments of the present application;
Fig. 9 is an exemplary flowchart of an SBC subscribing to a fast route relationship from an S-CSCF according to some embodiments of the present application;
Fig. 10 is an exemplary flowchart of an RCS AS subscribing to a fast route relationship from an S-CSCF according to some embodiments of the present application;
Fig. 11 is an exemplary flowchart of implementation of a fast routing mechanism, in which an SBC sends a request to an RCS AS, in a Page message service according to some embodiments of the present application;
Fig. 12 is another exemplary flowchart of implementation of a fast routing mechanism, in which an SBC sends a request to an RCS AS, in a Page message service according to some embodiments of the present application;
Fig. 13 is an exemplary flowchart of implementation of a fast routing mechanism, in which an SBC sends a request to an RCS AS, in a Large message service according to some embodiments of the present application;
Fig. 14 is another exemplary flowchart of implementation of a fast routing mechanism, in which an SBC sends a request to an RCS AS, in a Large message service according to some embodiments of the present application;
Fig. 15 is an exemplary flowchart of implementation of a fast routing mechanism, in which an RCS AS sends a request to an SBC, in a Page message service according to some embodiments of the present application;
Fig. 16 is another exemplary flowchart of implementation of a fast routing mechanism, in which an RCS AS sends a request to an SBC, in a Page message service according to some embodiments of the present application;
Fig. 17 is an exemplary flowchart of implementation of a fast routing mechanism, in which an RCS AS sends a request to an SBC, in a Large message service according to some embodiments of the present application;
Fig. 18 is another exemplary flowchart of implementation of a fast routing mechanism, in which an RCS AS sends a request to an SBC, in a Large message service according to some embodiments of the present application;
Fig. 19 is an exemplary flowchart of implementation of a fast routing mechanism among different RCS ASs according to some embodiments of the present application;
Fig. 20 is an exemplary flowchart of implementation of a fast routing mechanism among different networks according to some embodiments of the present application; and
Fig. 21 is a schematic diagram of a device for realizing signaling routing in rich communication according to some embodiments of the present application.

### Detailed Description

In order to make the objectives, technical solutions, and advantages of the present application clearer and more comprehensible, the following describes the embodiments of the present application in detail with reference to the accompanying drawings.

The operations shown in the flowchart of the figures may be performed in a computer system such as a set of computer executable instructions. Furthermore, although a logic sequence is shown in the flowchart, in some cases, the shown or described operations may be executed in a sequence different from that described here.

The embodiments of the present application provide a method and device for realizing signaling routing in rich communication. By adding the mechanisms of establishing, maintaining and transferring a fast route relationship in IMS networks, an SBC or an RCS AS can realize the direct communication of a service message according to the fast route relationship, thereby reducing signaling routing and system overhead. By means of the exemplary embodiments of the present application, the message service traffic on a device, such as a CSCF (including an I-CSCF (Interrogating CSCF) and an S-CSCF), can be reduced by more than 90%, thereby greatly reducing the requirements for an existing network device, reducing the length of a signaling route of a message service in a rich communication service, reducing system resource consumption, reducing fault points, and reducing investment costs.

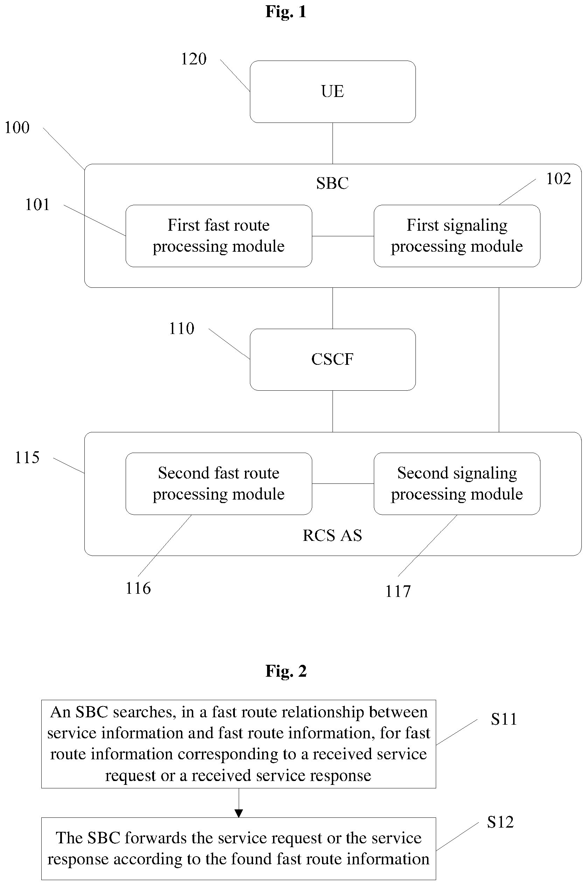

Fig. 1 is a schematic diagram of implementation architecture according to some embodiments of the present application. Fig. 1 shows main network elements and main logic functions involved in the embodiments of the present application. As shown in Fig. 1, an IMS network may include an SBC 100, a CSCF 110, an RCS AS 115, and a UE 120.

In the exemplary embodiment, the SBC 100 is responsible for providing access services for UE. In an exemplary embodiment, the SBC 100 may include a first fast route processing module 101 and a first signaling processing module 102.

The first fast route processing module 101 is configured to perform the following processing: acquiring fast route information from a service request or a service response, and establishing a fast route relationship and storing the fast route relationship locally; providing a retrieval function (namely, searching for fast route information corresponding to a service request or a service response from a locally stored fast route relationship), and providing fast route information for the service request satisfying a condition; providing a subscription or notification processing function for a fast route relationship, subscribing to a fast route relationship from the CSCF 110, extracting an updated fast route relationship from a fast route relationship change notification, and updating the locally stored fast route relationship.

The first signaling processing module 102 is configured to perform the following processing: interacting with the first fast route processing module 101 to acquire fast route information, and sending a service request (namely, sending a corresponding service request according to the acquired fast route information); adding fast routing supported indication information in a sent service request or service response, so as to facilitate other network elements (such as an S-CSCF or an RCS AS) to start a fast routing mechanism; adding fast route information to a sent service response, so as to facilitate other network elements (such as an S-CSCF or an RCS AS) to establish a fast route relationship.

In the exemplary embodiment, the CSCF 110 is configured to perform the following processing: establishing a fast route relationship according to a service triggering situation and storing the fast route relationship locally; providing a subscription or notification function of the fast route relationship, and providing a change notification of the fast route relationship to an SBC or an RCS AS; when forwarding a service request or a service response, inserting corresponding fast route information so as to facilitate an SBC or RCS AS to acquire the fast route information; providing a control function of the fast routing mechanism, and determining whether to enable the fast routing mechanism by deleting fast routing supported indication information or by not inserting the fast route information.

In the exemplary embodiment, the RCS AS 115 is configured to provide users with RCS services. In an exemplary embodiment, the RCS AS 115 may include a second fast route processing module 116 and a second signaling processing module 117.

The second fast route processing module 116 is configured to perform the following processing: acquiring fast route information from a service request or a service response, establishing a fast route relationship and storing the fast route relationship locally; providing a retrieval function (namely, searching for fast route information corresponding to a service request or a service response in a locally stored fast route relationship), and providing fast route information for the service request satisfying a condition; providing a subscription or notification processing function for a fast route relationship, subscribing to a fast route relationship from the CSCF 110, extracting an updated fast route relationship from a fast route relationship change notification, and updating the locally stored fast route relationship.

The second signaling processing module 117 is configured to perform the following processing: interacting with the second fast route processing module 116 to acquire fast route information, and sending a service request (namely, sending a corresponding service request according to the acquired fast route information); adding fast routing supported indication information in a sent service request or service response, so as to facilitate other network elements (such as an S-CSCF or an SBC) to start a fast routing mechanism; adding fast route information to a sent service response, so as to facilitate other network elements (such as an S-CSCF, an RCS AS or an SBC) to establish a fast route relationship.

In the exemplary embodiment, the UE 120 is configured to send or receive an RCS service request.

Fig. 2 is a flowchart of a method for realizing signaling routing in rich communication according to some embodiments of the present application. As shown in Fig. 2, the method for realizing signaling routing in rich communication provided by the embodiment includes the following operations S11 and S12.

At S11, an SBC searches, in a fast route relationship between service information and fast route information, for fast route information corresponding to a received service request or a received service response.

At S12, the service request or the service response is forwarded according to the found fast route information.

In the embodiment, by using a fast routing mechanism, the SBC can implement, according to a fast route relationship, direct message sending of a service request or a service response, and no longer needs to perform message forwarding through the CSCF. With regard to a message service, the service traffic on a device, such as a CSCF (including an I-CSCF and an S-CSCF), can be reduced by more than 90%, thereby greatly reducing the requirements for an existing network device.

In an exemplary embodiment, the service information may include: user information corresponding to a service, a service type (text, image, session message, file transmission, etc.), service features, etc. The fast route information may include information such as routing sequence information of a fast route and information of each network element on a message delivery path. In the exemplary embodiment, after receiving a service request or a service response, an SBC may search, in a fast route relationship according to service information of the service request or the service response, for fast route information corresponding to the service information, and then the SBC may forward the service request or the service response according to the found fast route information.

In an exemplary embodiment, the method of the embodiment may further include: in a case where the SBC fails to find, in the fast route relationship, the fast route information corresponding to the service request or the service response, the SBC adds fast routing supported indication information to the service request or the service response, and forwards the service request or the service response carrying the fast routing supported indication information to a CSCF. In an exemplary embodiment, when forwarding a service request or a service response to an S-CSCF, the SBC may carry, in the service request or the service response, fast routing supported indication information used for indicating that the SBC supports fast routing and forwarding of signaling.

In an exemplary embodiment, the method of the embodiment may further include: after receiving a service request carrying fast routing supported indication information forwarded by a CSCF, the SBC adds fast route information into a service response corresponding to the service request, and returns the service response carrying the fast route information to the CSCF. In an exemplary embodiment, the SBC may add specific header information in the service response to carry the fast route information to the S-CSCF.

In an exemplary embodiment, the method of the embodiment may further include: after receiving a service request or a service response carrying fast route information or the fast route relationship, the SBC extracts the fast route information or the fast route relationship from the service request or the service response, and stores the fast route information or the fast route relationship. The SBC may extract and store fast route information from a service request or a service response, or may extract and store a fast route relationship from a service request or a service response, so that subsequent messages can be quickly forwarded according to the stored fast route information or fast route relationship.

In an exemplary embodiment, the method of the embodiment may further include: the SBC sends a subscription request to a CSCF to subscribe to the fast route relationship related to the SBC; and the SBC receives a notification message carrying the fast route relationship sent by the CSCF, and stores the received fast route relationship. In the exemplary embodiment, the transfer of the fast route relationship may be achieved in a subscription-notification manner. When the fast route relationship subscribed to by the SBC changes, the CSCF sends a notification message carrying the updated fast route relationship to the SBC, so that the SBC can timely know the change of the subscribed fast route relationship.

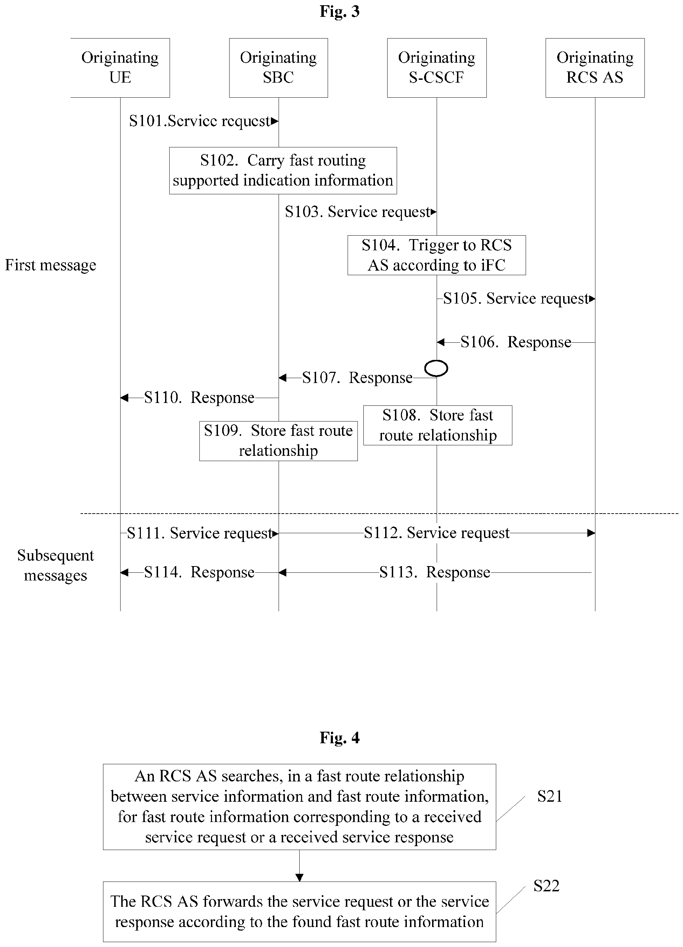

Fig. 3 is an exemplary flowchart of an originating UE initiating a service request according to some embodiments of the present application. In the exemplary embodiment, the flow that an originating UE initiates a service request includes operations S101 to 114.

At S101 to S103, when receiving a service request of a message service initiated by an originating UE for the first time, an originating SBC searches in a locally stored corresponding relationship between the message service and the RCS AS (corresponding to the above fast route relationship) but finds no information corresponding to the user, then the SBC forwards, according to information of an originating S-CSCF recorded during registration, the service request to the originating S-CSCF, wherein the SBC carries, in the service request, fast routing supported indication information for indicating that the originating SBC supports fast routing and forwarding of signaling.

At S104, the originating S-CSCF triggers to the RCS AS according to an initial triggering rule (e.g., Initial Filter Criteria (iFC)) subscribed to by the user.

At S105 to S106, after receiving the service request, the originating RCS AS determines that the originating SBC supports fast routing of signaling, inserts an extension header carrying fast route information into the service response, and returns a message successful reception response to the originating S-CSCF.

The fast route information inserted in the message successful reception response may include information of the originating RCS AS.

At S107 to S108, after receiving the message successful reception response, the originating S-CSCF determines whether the local fast routing policy allows to enable the fast routing, and in a case where the local fast routing policy allows to enable the fast routing, the originating S-CSCF establishes, for the user, a fast route relationship between the message service and the RCS AS, and carries the fast route relationship in an extension header of a message successful reception response sent to the originating SBC. Furthermore, the originating S-CSCF locally stores the fast route relationship, and allows other network elements to subscribe to the fast route relationship.

In the exemplary embodiment, the S-CSCF may establish the fast route relationship among the user, the service type, the SBC and the RCS AS according to the fast route information extracted from the message successful reception response, locally store the fast route relationship, add the fast route relationship to an extended header of the message successful reception response, and forward the message successful reception response to the originating SBC. In other words, in the embodiment, the S-CSCF arranges the fast route information carried in the service response, adds the arranged fast route information to the service response, and forwards the service response to the originating SBC. However, the embodiments of the present application have no specific limitation on the processing manner. In other embodiments, after receiving the message successful reception response, the S-CSCF may directly forward the message successful reception response carrying the fast route information to the originating SBC. In other words, the S-CSCF is only responsible for forwarding the service response without changing the fast route information carried in the service response.

In a case where the local fast routing policy does not allow to enable the fast routing, the fast route information carried in the message successful reception response may be deleted, and sends the message successful reception response from which the fast route information is deleted to the originating SBC.

It should be noted that, the local fast routing policy on the S-CSCF may be pre-configured or configured according to actual requirements, for example, the local fast routing policy may specify not to allow fast routing for a message service of a certain type of users. The embodiments of the present application do not limit the content of the local fast routing policy.

At S109, after receiving the message successful reception response, the originating SBC extracts from the message successful reception response the fast route relationship between the message service of the user and the RCS AS, and locally stores the fast route relationship. However, the embodiments of the present application have no specific limitation on the processing manner. In other embodiments, the SBC may also subscribe to a change of the fast route relationship between the message service of the user and the RCS AS from the S-CSCF, so that when the fast route relationship between the message service of the user and the RCS AS changes, the S-CSCF may send a notification message to the SBC. In other embodiments, after receiving a response carrying the fast route information, the originating SBC may extract the fast route information from the response, and locally establish the fast route relationship between the message service and the RCS AS for the user.

At S110, the originating SBC deletes the fast route relationship between the message service of the user and the RCS AS that is carried in the message successful reception response, forwards the message successful reception response to the originating UE to complete the message service request of the first time.

At S111 to S112, when the originating SBC receives a service request of the same message service sent by the originating UE for the second time, the originating SBC queries the locally stored fast route relationship between the message service of the user and the RCS AS, finds that there is a corresponding RCS AS matching the service feature of the message service of the service request, and the originating SBC directly forwards the service request to the RCS AS without the need of forwarding the service request via the S-CSCF.

At S113, after receiving the service request, the originating RCS AS returns a response to the originating SBC.

At S114, the originating SBC forwards the response to the originating UE to complete the service request.

In the exemplary embodiment, by implementing fast routing on the originating SBC and the originating RCS AS, message direct communication between the originating SBC and the originating RCS AS can be implemented, thereby reducing signaling routing and system overhead.

Fig. 4 is another exemplary flowchart of a method for realizing signaling routing in rich communication according to some embodiments of the present application. As shown in Fig. 4, the method for realizing signaling routing in rich communication provided in the embodiment includes operations S21 and S22.

At S21, an RCS AS searches, in a fast route relationship between service information and fast route information, for fast route information corresponding to a received service request or a received service response.

At S22, the RCS AS forwards the service request or the service response according to the found fast route information.

In the embodiment, the RCS AS uses a fast routing mechanism, and can implement direct communication of a service request or a service response according to a fast route relationship without the need of forwarding the service request or the service response via an S-CSCF. With regard to a message service, the service traffic on a device, such as a CSCF (including an I-CSCF and an S-CSCF), can be reduced by more than 90%, thereby greatly reducing the requirements for an existing network device.

In an exemplary embodiment, the service information may include: user information corresponding to a service, a service type (text, image, session message, file transmission, etc.), service features, etc. The fast route information may include information such as routing sequence information of a fast route and information of each network element on a message delivery path. In the exemplary embodiment, after receiving a service request or a service response, the RCS AS may search, in a fast route relationship according to service information of the service request or the service response, for fast route information corresponding to the service information, and then the RCS AS may forward the service request or the service response according to the found fast route information.

In an exemplary embodiment, the method of the embodiment may further include: in a case where the RCS AS fails to find, in the fast route relationship, the fast route information corresponding to the service request or the service response, the RCS AS adds fast routing supported indication information to the service request or the service response, and forwards the service request or the service response carrying the fast routing supported indication information to a CSCF. In an exemplary embodiment, when forwarding a service request or a service response to an S-CSCF, the RCS AS may carry, in the service request or the service response, fast routing supported indication information for indicating that the RCS AS supports fast routing and forwarding of signaling.

In an exemplary embodiment, the method of the embodiment may further include: after receiving a service request carrying fast routing supported indication information forwarded by a CSCF, the RCS AS adds fast route information into a service response corresponding to the service request, and returns the service response carrying the fast route information to the CSCF. In an exemplary embodiment, the RCS AS may add specific header information to the service response to carry the fast route information to the S-CSCF.

In an exemplary embodiment, the method of the embodiment may further include: after receiving a service request or a service response carrying fast route information or the fast route relationship, the RCS AS extracts the fast route information or the fast route relationship from the service request or the service response, and stores the fast route information or the fast route relationship. The RCS AS may extract and store fast route information from a service request or a service response, or may extract and store a fast route relationship from a service request or a service response, so that subsequent messages can be quickly forwarded according to the stored fast route relationship or fast route information.

In an exemplary embodiment, the method of the embodiment may further include: the RCS AS sends a subscription request to a CSCF to subscribe to the fast route relationship related to the RCS AS; and the RCS AS receives a notification message carrying the fast route relationship sent by the CSCF, and stores the received fast route relationship. In the exemplary embodiment, the transfer of the fast route relationship may be achieved in a subscription-notification manner. When the fast route relationship subscribed to by the RCS AS changes, the CSCF sends a notification message carrying the updated fast route relationship to the RCS AS, so that the RCS AS can timely know the change of the subscribed fast route relationship.

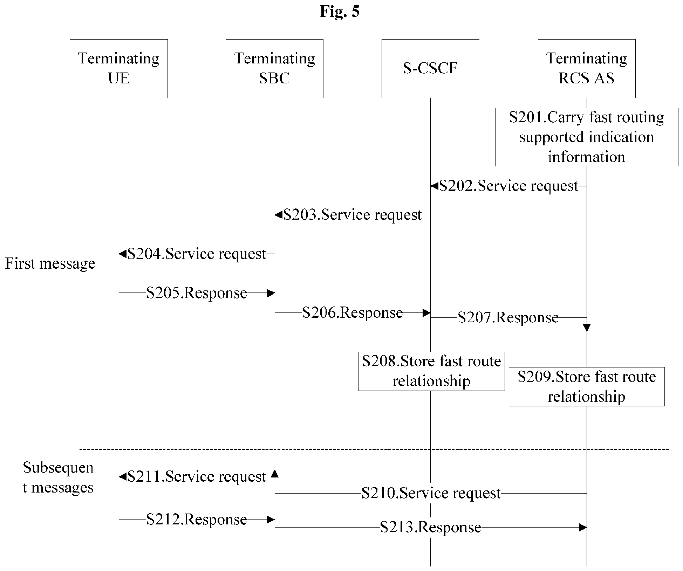

Fig. 5 is an exemplary flowchart of a terminating side initiating a service request to a terminating UE according to some embodiments of the present application. In the exemplary embodiment, the process that a terminating side sends a service request to a terminating UE may include operations S201 to S213.

At S201 to S202, when a terminating RCS AS sends a service request to a terminating user for the first time, and finds that there is no fast route information on the terminating user, then the terminating RCS AS sends the service request to an S-CSCF to which the user registers, and carries fast routing supported indication information in the service request for indicating that the RCS AS supports fast routing and forwarding of signaling.

At S203, the S-CSCF forwards the service request to an SBC to which the user registers.

At S204, the SBC forwards the service request to the terminating UE.

At S205 to S206, after receiving a response returned by the terminating UE, the SBC determines that the terminating RCS AS supports fast routing and forwarding of signaling, inserts a header carrying fast route information into the response, and forwards the response to the S-CSCF. The fast route information inserted in the response may include information of the terminating SBC.

At S207 to S208, after receiving the response, in a case where the S-CSCF finds that the SBC supports local fast routing of signaling (for example, the response sent by the SBC to the S-CSCF may carry indication information for indicating that the SBC supports fast routing), and the local fast routing policy of the S-CSCF allows fast routing, then the S-CSCF establishes a fast route relationship among the user, the service type, the SBC and the RCS AS, and carries the fast route relationship in an extended header of the response forwarded to the terminating RCS AS. Furthermore, the fast route relationship is stored locally, and other network elements are allowed to subscribe to the fast route relationship.

At S209, after receiving the response, the terminating RCS AS extracts the fast route relationship from the response and stores the fast route relationship.

At S210, when the terminating RCS AS sends a service request of the same service to the terminating user for the second time, the terminating RCS AS finds that there is a corresponding fast route information on the terminating user, and there is a corresponding SBC matching service features of the service request, then the terminating RCS AS directly forwards the service request to the corresponding SBC without forwarding the service request through the S-CSCF.

At S211, the terminating SBC forwards the service request to the terminating UE.

At S212, the terminating UE returns a response to the terminating SBC.

At S213, the terminating SBC returns a response to the terminating RCS AS, thereby implementing message delivery on the terminating side.

In the exemplary embodiment, by implementing fast routing on the terminating RCS AS and the terminating SBC, message direct communication between the terminating SBC and the terminating RCS AS can be implemented, thereby reducing signaling routing and system overhead.

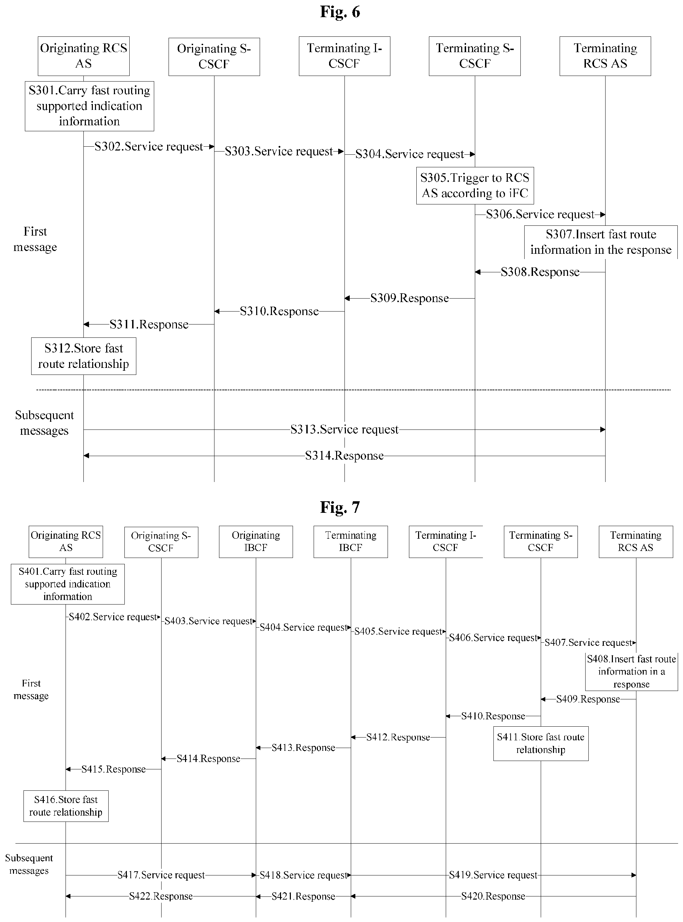

Fig. 6 is an exemplary flowchart of implementing fast routing between different RCS ASs in the same network according to some embodiments of the present application. In the exemplary embodiment, the fast routing implemented between different RCS ASs in the same network may include operations S301 to S314.

At S301 to S302, when sending a service request to a terminating side for the first time, an originating RCS AS checks a fast route relationship corresponding to an originating user but fails to find corresponding fast route information, and therefore selects to perform routing according to a normal signaling routing mechanism. The originating RCS AS forwards, according to information of an originating S-CSCF recorded during registration, the service request to the originating S-CSCF, wherein the originating RCS AS carries, in the service request, fast routing supported indication information for indicating that the originating RCS AS supports fast routing and forwarding of signaling.

At S303, the originating S-CSCF performs a query in an ENUM (Telephone Number Mapping working group) or a DNS (Domain Name System) to acquire the terminating I-CSCF to which the terminating user belongs, and forwards the service request to the terminating I-CSCF.

At S304, the terminating I-CSCF performs a query in an HSS (Home Subscriber Server) to acquire the S-CSCF to which the terminating user belongs, and forwards the service request to the terminating S-CSCF.

At S305 to S306, the terminating S-CSCF selects an RCS AS according to an initial filtering rule (e.g., Initial Filter Criteria (iFC)) subscribed by the terminating user, and forwards the service request to the terminating RCS AS.

At S307 to S308, after receiving the service request, the terminating RCS AS determines that the originating RCS AS supports fast routing of signaling, and sends a response carrying fast route information to the terminating S-CSCF. For example, an extended header carrying the fast route information is inserted into the response. The fast route information inserted in the response may include information of the terminating RCS AS.

At S309, after receiving the response, the terminating S-CSCF checks that the local fast routing policy allows fast routing, and forwards the response to the terminating I-CSCF directly without deleting the fast route information carried in the response. In an exemplary embodiment, the terminating S-CSCF may also locally store fast route information, and establish a fast route relationship between the service information and the fast route information according to the fast route information, so as to facilitate subscription by other network elements.

At S310, the terminating I-CSCF forwards the response to the originating S-CSCF.

At S311, after receiving the response, the originating S-CSCF checks that the local fast routing policy allows fast routing, and forwards the response directly to the originating RCS AS without deleting the fast route information carried in the response.

At S312, the originating RCS AS extracts the fast route information from the response, and locally establishes a fast route relationship between the message type of the service request of the originating user and the terminating RCS AS.

At S313, when the originating RCS AS receives a service request from the originating UE again, the originating RCS AS checks the fast route relationship corresponding to the user, finds that there is a corresponding terminating RCS AS matching the current message service request, and extracts the information of the RCS AS.

The originating RCS AS directly forwards the service request to the terminating RCS AS, and forwards the service request according to a path from the originating RCS AS to the terminating RCS AS, without the forwarding through the S-CSCF and the I-CSCF.

At S314, the terminating RCS AS returns a message successful reception response to the originating RCS AS, so as to complete message delivery.

In the exemplary embodiment, by implementing fast routing on the originating RCS AS and the terminating RCS AS in the same network, message direct communication between the originating RCS AS and the terminating RCS AS in the same network can be implemented, thereby reducing signaling routing and system overhead.

Fig. 7 is an exemplary flowchart of implementing fast routing between different networks according to some embodiments of the present application. In the exemplary embodiment, the fast routing implemented between different networks may include operations S401 to S422.

At S401 to S402, when an originating RCS AS sends a service request to a terminating side for the first time, the originating RCS AS checks a fast route relationship corresponding to the originating user but fails to find corresponding fast route information, and therefore selects to perform routing according to a normal signaling routing mechanism. The originating RCS AS forwards, according to information of an originating S-CSCF recorded during registration, the service request to the originating S-CSCF, wherein the originating RCS AS carries, in the service request, fast routing supported indication information for indicating that the originating RCS AS supports fast routing and forwarding of signaling.

At S403, the originating S-CSCF performs a query in an ENUM or a DNS in the local network, and if no terminating user is found, sends the service request to an IBCF (Interconnection Border Control Function) in the local network according to a local policy.

At S404, the originating IBCF checks that fast routing is supported by the originating side, adds information of the originating IBCF to the fast route information, and forwards the service request (carrying the information of the originating IBCF) to the terminating IBCF.

At S405, the terminating IBCF checks that fast routing is supported at the originating side, adds information of the terminating IBCF to the fast route information, and forwards the service request (carrying the information of the originating IBCF and the information of the terminating IBCF) to the terminating I-CSCF.

At S406, the terminating I-CSCF performs a query in the HSS to acquire the S-CSCF to which the terminating user belongs, and forwards the service request to the terminating S-CSCF.

At S407, the terminating S-CSCF selects the RCS AS according to an initial filtering rule (e.g., Initial Filter Criteria (iFC)) subscribed by the terminating user, and forwards the service request to the terminating RCS AS.

At S408 to S409, the terminating RCS AS determines that the originating RCS AS supports fast routing of signaling, and sends a response carrying fast route information to the terminating S-CSCF. The fast route information inserted in the response may include: information of the terminating RCS AS, information of the terminating IBCF, and information of the originating IBCF.

At S410, after receiving the response, the terminating S-CSCF checks that the local fast routing policy allows fast routing, and forwards the response directly to the terminating I-CSCF without deleting the fast route information carried in the response. In an exemplary embodiment, at S411, the terminating S-CSCF may also locally store the fast route information, and establish a fast route relationship between the service information (including the user information and the service type corresponding to the service, and the like) and the fast route information, so as to facilitate subscription by other network elements.

At S412, the terminating I-CSCF forwards the response to the terminating IBCF.

At S413, the terminating IBCF checks that the originating side supports fast routing, and forwards the service response carrying the fast route information to the originating IBCF.

At S414, the originating IBCF checks that the originating side supports fast routing, and forwards the service response carrying the fast route information to the originating S-CSCF.

At S415, after receiving the response, the originating S-CSCF checks that the local fast routing policy allows fast routing, and forwards the response directly to the originating RCS AS without deleting the fast route information carried in the response.

At S416, the originating RCS AS extracts the fast route information from the response, and locally establishes a fast route relationship between the service information (including the user information and the service type corresponding to the service, and the like) and the fast route information.

At S417 to S419, the originating RCS AS receives a service request from the originating UE again, and forwards the request according to a path from the originating RCS AS, to the originating IBCF, further to the terminating IBCF, and further to the terminating RCS AS, without the forwarding through the S-CSCF and the I-CSCF.

At S420 to S422, the terminating RCS AS returns a message successful reception response, and forwards the message response according to a path from the terminating RCS AS, to the terminating IBCF, further to the originating IBCF, and further to the originating RCS AS, so as to complete message delivery.

In the exemplary embodiment, by implementing fast routing on the originating RCS AS and the terminating RCS AS in different networks, message direct communication between the originating RCS AS and the terminating RCS AS in different networks can be implemented, thereby reducing signaling routing and system overhead.

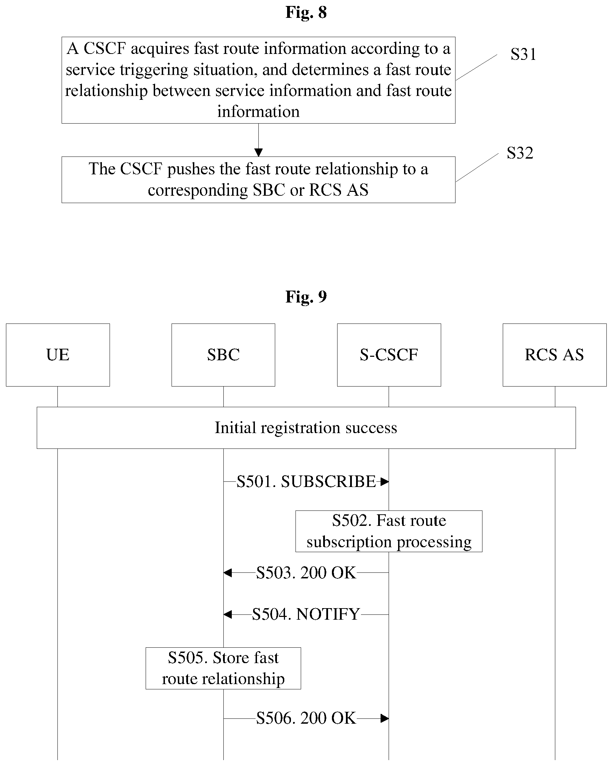

Fig. 8 is another exemplary flowchart of a method for realizing signaling routing in rich communication according to some embodiments of the present application. As shown in Fig. 8, the method for realizing signaling routing in rich communication provided in the embodiment includes operations S31 and S32.

At S31, a CSCF acquires fast route information according to a service triggering situation, and determines a fast route relationship between service information and the fast route information.

At S32, the CSCF pushes the fast route relationship to a corresponding SBC or RCS AS.

In the embodiment, the CSCF establishes the fast route relationship between the service request and the fast route information, and synchronizes the fast route relationship to the SBC and the RCS AS, so as to enable the SBC and the RCS AS to implement message direct communication according to the fast route relationship, thereby reducing signaling routing and system overhead.

In an exemplary embodiment, the service information may include: user information corresponding to a service, a service type (text, image, session message, file transmission, etc.), service features, etc. The fast route information may include information such as routing sequence information of a fast route and information of each network element on a message delivery path. In the exemplary embodiment, after acquiring the fast route information, the CSCF may establish a fast route relationship between the service information and the fast route information, and then push the fast route relationship to a network element subscribing to the fast route relationship, or add the fast route relationship in a service request or a service response forwarded to other network elements, so that the other network elements acquire the fast route relationship.

In an exemplary embodiment, at S31, the operation that the CSCF acquires the fast route information according to the service triggering situation may include: extracting the fast route information from a received service response carrying the fast route information; or determining, according to a forwarding situation of a service request and a service response corresponding to the service request, the fast route information of the service request and the service response. The CSCF may acquire the fast route information according to the information carried in the response, or may acquire the fast route information by analyzing the situation of the transmission path of the service request and the service response.

In an exemplary embodiment, the operation S32 may include: pushing, to the SBC or the RCS AS sending a subscription request, a notification message carrying the subscribed fast route relationship; pushing, by the CSCF, updated fast route relationship to the SBC or the RCS AS in a case where the fast route relationship subscribed to by the SBC or the RCS AS changes. In the exemplary embodiment, the CSCF may push the fast route relationship to the SBC or the RCS AC in a subscription-notification manner.

In an exemplary embodiment, the operation S32 may include: adding, to a service request or a service response to be forwarded to the SBC or the RCS AS, the fast route information corresponding to the service request or the service response, and forwarding the service request or the service response carrying the fast route information to the SBC or the RCS AS; or, adding the fast route relationship to a service request or a service response to be forwarded to the SBC or the RCS AS, and forwarding the service request or the service response carrying the fast route relationship to the SBC or the RCS AS. In the exemplary embodiment, the CSCF may insert fast route information or a fast route relationship when forwarding a service request or a service response, so that the SBC or the RCS AS can acquire the fast route information and determine the corresponding fast route relationship.

In an exemplary embodiment, the method of the embodiment may further include at least one of:
after receiving a service request or a service response carrying fast route information, determining, by the CSCF according to a local fast routing policy, whether fast route is allowed, and in a case of determining that fast routing is not allowed, deleting, by the CSCF, the carried fast route information from the service request or the service response, and forwarding, by the CSCF, the service request or the service response not carrying the fast route information; and in a case of determining that fast routing is allowed, forwarding, by the CSCF, the service request or the service response carrying the fast route information; and
after receiving a service request or a service response carrying fast routing supported indication information, determining, by the CSCF according to a local fast routing policy, whether fast route is allowed; in a case of determining that fast routing is not allowed, deleting, by the CSCF, the carried fast routing supported indication information from the service request or the service response, and forwarding, by the CSCF, the service request or the service response not carrying the fast routing supported indication information; and in a case of determining that fast routing is allowed, forwarding, by the CSCF, the service request or the service response carrying the fast routing supported indication information.

In the exemplary embodiment, the CSCF can provide a control function of the fast routing mechanism, and determine whether to enable the fast routing by deleting fast routing supported indication information or by not inserting the fast route information.

It can be seen from the above embodiments that the embodiments of the present application add the mechanisms of establishing, maintaining and transferring a fast route relationship in IMS networks, and implement fast routing on devices such as an RCS AS and an SBC, thereby greatly improving the routing efficiency of an RCS service in an IMS network, and reducing signaling routing and system overhead.

The embodiments of the present application will be illustrated below by reference to a plurality of exemplary embodiments.

Fig. 9 is an exemplary flowchart of an SBC subscribing to a fast route relationship from an S-CSCF according to some embodiments of the present application. It should be noted that, in the exemplary embodiment, the subscription function is implemented by using the SIP protocol, however, in other implementations, the embodiments of the present application are also applicable to other protocols, and the embodiments of the present application have no specific limitation on the applied protocols. In addition, the SBC may initiate subscription at an appropriate moment as required, for example, in the exemplary embodiment, the SBC may initiate subscription after the UE successfully registers.

As shown in Fig. 9, the process that an SBC subscribes to a fast route relationship from an S-CSCF in the example includes operations S501 to S506.

At S501, after registration of a UE succeeds, the SBC sends an SIP SUBSCRIBE request to an S-CSCF to which the user registers.

At S502, after receiving the SIP SUBSCRIBE request, the S-CSCF performs subscription processing. A subscription event in the SIP SUBSCRIBE request is a fast route relationship, and may include: subscribing to the fast route relationship, and filtering conditions for subscribed information, etc., for example, Event: fast-route; type=mo, wherein "fast-route" represents subscribing to the fast route relationship, and "type" indicates that the filtering condition of the subscribed information is mo. It should be noted that mo may represent an originating path from the SBC to the RCS AS, mt represents a terminating path from the RCS AS to the SBC, and transit represents an inter-network path from the RCS AS to the RCS AS. If the type parameter is not carried, it represents that all information is subscribed without filtering.

At S503, the S-CSCF returns a 200 OK response to the SBC, indicating that the subscription succeeds.

At S504, the S-CSCF sends a NOTIFY message to the SBC, wherein a fast route relationship is carried in a message body of the NOTIFY message, and the carried fast route relationship may include the application type of the fast route information (an originating side, a terminating side, NNI (Network to Network Interface), interworking, etc.), a service type corresponding to the fast route information (text, image, session message, file transmission, etc.), and fast route information (fast routing sequence information, information of each network element in a fast route path, and the like).

At S505, the SBC locally stores the received fast route relationship.

At S506, the SBC returns a 200 OK response to the S-CSCF, indicating that the fast route relationship is received.

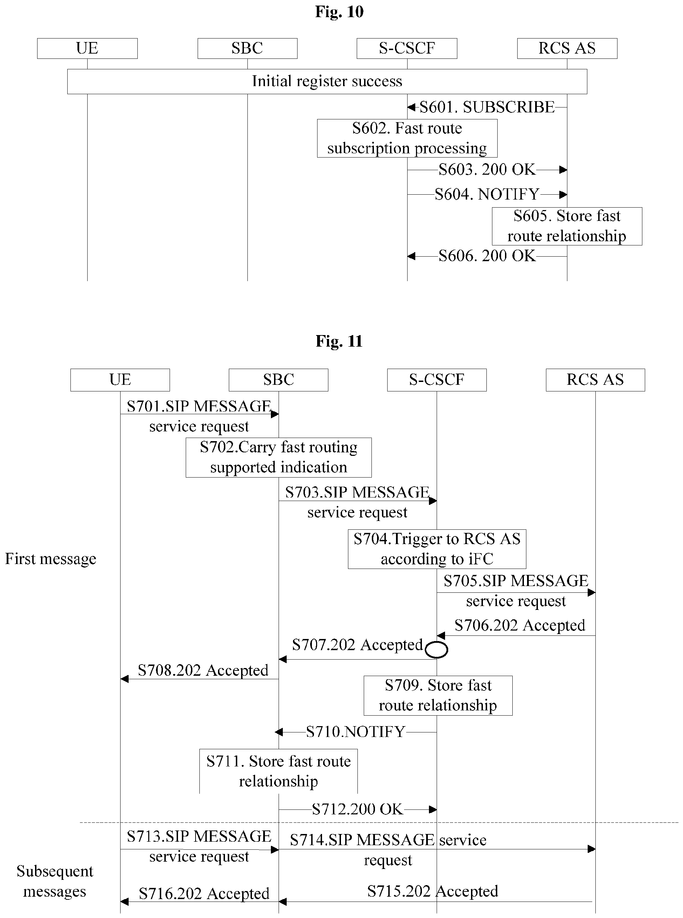

Fig. 10 is an exemplary flowchart of an RCS AS subscribing to a fast route relationship from an S-CSCF according to some embodiments of the present application. It should be noted that, in the exemplary embodiment, the subscription function is implemented by using the SIP protocol, however, the embodiments of the present application have no limitation on the used protocols, and other implementations are also applicable to other protocols. In addition, the RCS AS may initiate subscription at an appropriate moment as required, for example, in the exemplary embodiment, the RCS AS may initiate subscription after the UE successfully registers.

As shown in Fig. 10, the flow that the RCS AS subscribes to the fast route relationship from the S-CSCF in the example includes operations S601 to S606.

At S601, after registration of a UE succeeds, the RCS AS sends an SIP SUBSCRIBE request to an S-CSCF to which the user registers.

At S602, after receiving the SIP SUBSCRIBE request, the S-CSCF performs subscription processing. A subscription event in the SIP SUBSCRIBE request is a fast route relationship, and may include: subscribing to the fast route relationship, and filtering conditions for subscribed information, etc., for example, the filtering conditions may include: an originating path (an originating path from the SBC to the RCS AS), a terminating path (a terminating path from the RCS AS to the SBC), and an inter-network path (an inter-network path between the RCS AS and the RCS AS). If no filtering condition is carried, it represents that all information is subscribed without filtering.

At S603, the S-CSCF returns a 200 OK response to the RCS AS, indicating successful subscription.

At S604, the S-CSCF sends a NOTIFY message to the RCS AS, wherein a fast route relationship is carried in a message body of the NOTIFY message, and the carried fast route relationship may include the application type of the fast route information (an originating side, a terminating side, NNI, interworking, etc.), a service type corresponding to the fast route information (text, image, session message, file transmission, etc.), and fast route information (fast routing sequence information, information of each network element in a fast route path, and the like).

At S605, the RCS AS locally stores the received fast route relationship.

At S606, the RCS AS returns a 200 OK response to the S-CSCF, indicating that the fast route relationship is received.

Fig. 11 is an exemplary flowchart of implementation of a fast routing mechanism, in which an SBC sends a request to an RCS AS, in a Page message service according to some embodiments of the present application. In the exemplary embodiment, information transfer is implemented in a subscription-notification manner. The S-CSCF sends the fast route information to the SBC through a notification mechanism.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 11, in the example, the flow of the fast routing mechanism, in which an SBC sends a request to an RCS AS, in a Page message service may include operations S701 to S716.

At S701, an originating UE initiates an SIP MESSAGE service request.

At S702 to S703, when receiving the SIP MESSAGE service request initiated by the originating UE for the first time, the originating SBC checks a fast route relationship corresponding to the user but fails to find corresponding fast route information, and therefore selects to perform routing according to a normal signaling routing mechanism. The originating SBC forwards, according to information of an originating S-CSCF recorded during registration, the SIP MESSAGE service request to the originating S-CSCF, and carries, in the SIP MESSAGE service request, fast routing supported indication information for indicating that the originating SBC supports fast routing and forwarding of signaling.

At S704 to S705, the originating S-CSCF selects an RCS AS according to an initial filtering rule (e.g., Initial Filter Criteria (iFC)) subscribed by the user, and forwards the SIP MESSAGE service request carrying the fast routing supported indication information to the RCS AS.

At S706, the RCS AS returns a message successful reception response (e.g., 202 Accepted response) to the S-CSCF.

At S707, after receiving the 202 Accepted response, the S-CSCF forwards the 202 Accepted response to the originating SBC.

At S708, the originating SBC forwards the 202 Accepted response to the originating UE.

At S709 to S710, after receiving the 202 Accepted response, the S-CSCF updates the fast route relationship of the user, and determines that the SBC has subscribed to the fast route relationship, then the S-CSCF sends an SIP NOTIFY message to the SBC to notify of the newly established fast route relationship. The fast route relationship may include the application type of the fast route information (an originating side, a terminating side, NNI, interworking, etc.), a service type corresponding to the fast route information (text, image, session message, file transmission, etc.), and fast route information (fast routing sequence information, information of each network element in a fast route path, and the like).

At S711, the originating SBC receives the NOTIFY message, extracts the fast route relationship (for example, the correspondence between the message service of the user and the RCS AS) from the NOTIFY message, and locally stores the fast route relationship.

At S712, the originating SBC returns a 200 OK response, indicating that the NOTIFY message is received.

At S713, when receiving the SIP MESSAGE service request of the originating UE, the originating SBC checks a fast route relationship corresponding to the user, finds that the current message service request meets service features in the local fast route relationship, and extracts corresponding RCS AS information.

At S714, the originating SBC directly forwards the SIP MESSAGE service request to the RCS AS without the forwarding through the S-CSCF.

At S715, the RCS AS returns a message successful reception response (e.g., 202 Accepted response) to the originating SBC.

At S716, the originating SBC forwards the 202 Accepted response to the originating UE, and the message delivery is completed.

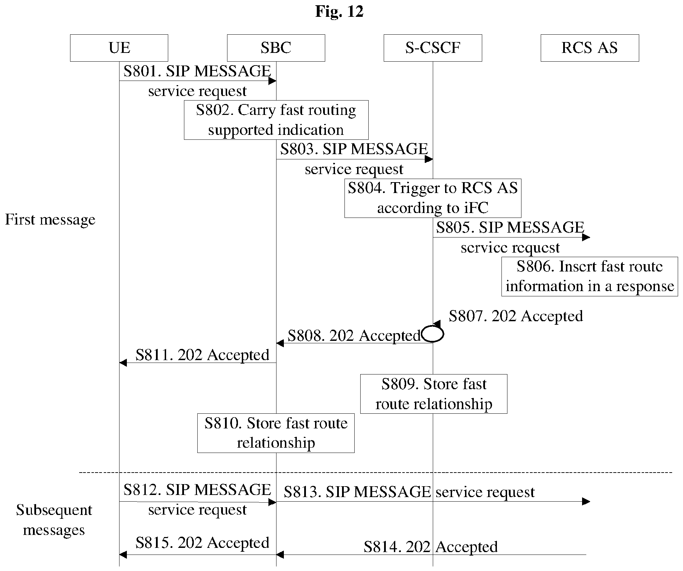

It should be noted that, after receiving the 202 Accepted response, the S-CSCF may execute S707 and S709 at the same time, or execute S709 first and then execute S707, and the present application has no limitation on the execution sequence. Fig. 12 is another exemplary flowchart of implementation of a fast routing mechanism, in which an SBC sends a request to an RCS AS, in a Page message service according to some embodiments of the present application. In the exemplary embodiment, information transfer is achieved in a response manner. The fast route information is transferred by adding a specific header in the response message, and the header can be defined as required. The present application has no limitation on the specific definition of the header.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 12, in the example, the flow of the fast routing mechanism, in which an SBC sends a request to an RCS AS, in a Page message service includes operations S801 to S815.

At S801, an originating UE initiates an SIP MESSAGE request.

At S802 to S803, when receiving the SIP MESSAGE service request initiated by the originating UE for the first time, the originating SBC checks a fast route relationship corresponding to the user but fails to find corresponding fast route information, and therefore selects to perform routing according to a normal signaling routing mechanism. The originating SBC forwards, according to information of an originating S-CSCF recorded during registration, the SIP MESSAGE service request to the originating S-CSCF, and carries, in the SIP MESSAGE request, fast routing supported indication information for indicating that the originating SBC supports fast routing and forwarding of signaling.

At S804 to S805, the originating S-CSCF selects an RCS AS according to an initial filtering rule (e.g., Initial Filter Criteria (iFC)) subscribed by the user, and forwards the SIP MESSAGE request to the RCS AS.

At S806, the RCS AS determines that the originating SBC supports fast routing of signaling, and inserts specific header information carrying the fast route information into a message successful reception response (e.g., 202 Accepted response), for example: X-Fast-Route: <10.41.25.10:5260>. The fast route information may include information of the originating RCS AS.

At S807, the RCS AS sends the 202 Accepted response to the S-CSCF.

At S808 to S809, after receiving the 202 Accepted response, the S-CSCF checks a local fast routing policy (judging whether it is allowed to execute fast routing). When it is allowed to execute fast routing, a fast route relationship between the message service of the user and the RCS AS is established locally according to the fast route information carried in the response, so as to facilitate subscription by other network elements. The S-CSCF then forwards the 202 Accepted response carrying the fast route relationship to the originating SBC.

At S810, after receiving the 202 Accepted response, the originating SBC extracts the fast route relationship (for example, the corresponding relationship between the SIP MESSAGE type message and the RCS AS) from the specific header information of the 202 Accepted response, and locally stores the extracted fast route relationship.

At S811, after deleting the fast route relationship in the 202 Accepted response, the originating SBC forwards the 202 Accepted response to the originating UE to complete the message service request of the first time.

At S812, when the originating SBC receives an SIP MESSAGE service request of the originating UE again, the originating SBC checks a fast route relationship of the user, finds that the current message service request meets service features in the local fast route relationship, and extracts corresponding RCS AS information.

At S813, the originating SBC directly forwards the SIP MESSAGE service request to the RCS AS without the forwarding through the S-CSCF.

At S814, the RCS AS returns a message successful reception response (e.g., 202 Accepted response) to the originating SBC.

At S815, the originating SBC forwards the 202 Accepted response to the originating UE, and the message delivery is completed.

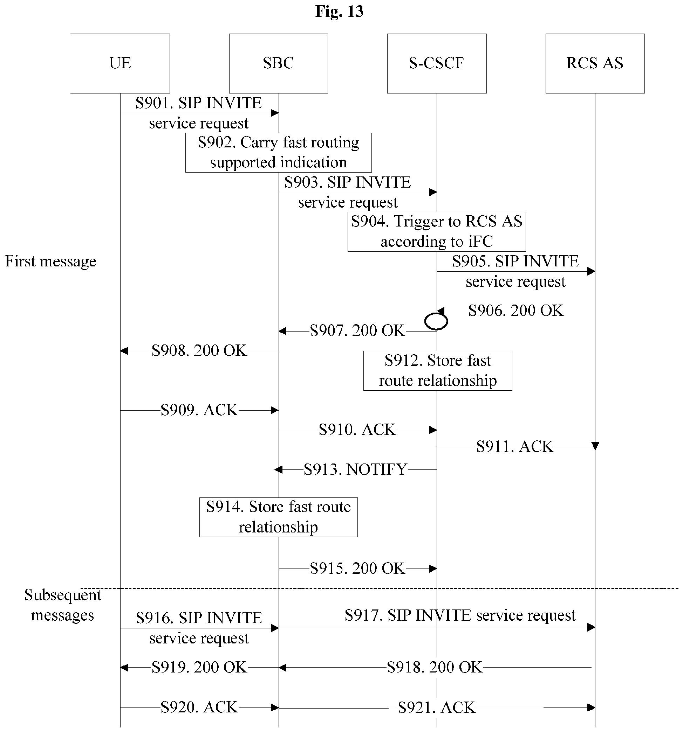

Fig. 13 is an exemplary flowchart of implementation of a fast routing mechanism, in which an SBC sends a request to an RCS AS, in a Large message service according to some embodiments of the present application. In the exemplary embodiment, information transfer is implemented in a subscription-notification manner. The S-CSCF sends the fast route information to the SBC through a notification mechanism.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 13, in the example, the flow of the fast routing mechanism, in which an SBC sends a request to an RCS AS, in a Large message service may include operations S901 to S921.

At S901, an originating UE initiates an SIP INVITE service request.

At S902 to S903, when receiving the SIP INVITE service request initiated by the originating UE for the first time, the originating SBC checks a fast route relationship corresponding to the user but fails to find the corresponding fast route information, and therefore selects to perform routing according to a normal signaling routing mechanism. The originating SBC forwards, according to information of an originating S-CSCF recorded during registration, the SIP INVITE service request to the originating S-CSCF, and carries, in the SIP INVITE service request, fast routing supported indication information for indicating that the originating SBC supports fast routing and forwarding of signaling.

At S904 to S905, the originating S-CSCF selects an RCS AS according to an initial filtering rule (e.g., Initial Filter Criteria (iFC)) subscribed by the user, and forwards the SIP INVITE service request carrying the fast routing supported indication information to the RCS AS.

At S906, the RCS AS returns a message successful reception response (e.g., 200 OK response) to the S-CSCF.

At S907, after receiving the 200 OK response, the S-CSCF forwards the 200 OK response to the originating SBC.

At S908, the originating SBC forwards the 200 OK response to the originating UE.

At S909, the originating UE sends an acknowledgement (ACK) request to the originating SBC, indicating that the session is established.

At S910, the originating SBC forwards the ACK request to the S-CSCF.

At S911, the S-CSCF forwards the ACK request to the RCS AS, and the first session is successfully established.

At S912 to S913, after receiving the 200 OK response, the S-CSCF updates the fast route relationship of the user, and determines that the SBC has subscribed to the fast route relationship, and then sends an SIP NOTIFY message to the SBC to notify of the newly established fast route relationship. The fast route relationship may include: the application type of the fast route information (an originating side, a terminating side, NNI (Network to Network Interface), interworking, etc.), a service type corresponding to the fast route information (text, image, session message, file transmission, etc.), and fast route information (fast routing sequence information, information of each network element in a fast route path, and the like).

At S914, the originating SBC receives the NOTIFY message, extracts the fast route relationship (for example, the correspondence between the message service of the user and the RCS AS) from the NOTIFY message, and locally stores the fast route relationship.

At S915, the originating SBC returns a 200 OK response, indicating that the NOTIFY message is received.

At S916, when the originating SBC receives the SIP INVITE service request from the originating UE again, the originating SBC checks the fast route relationship corresponding to the user, finds that the current message service request meets the service features in the local fast route relationship, and extracts the corresponding RCS AS information.

At S917, the originating SBC directly forwards the SIP INVITE service request to the RCS AS without the forwarding through the S-CSCF.

At S918, the RCS AS returns a message successful reception response (e.g., 200 OK response) to the originating SBC.

At S919, the originating SBC forwards the 200 OK response to the originating UE.

At S920, the originating UE sends an ACK request to the originating SBC, indicating that a session is established.

At S921, the originating SBC forwards the ACK request to the RCS AS, and the session is successfully established.

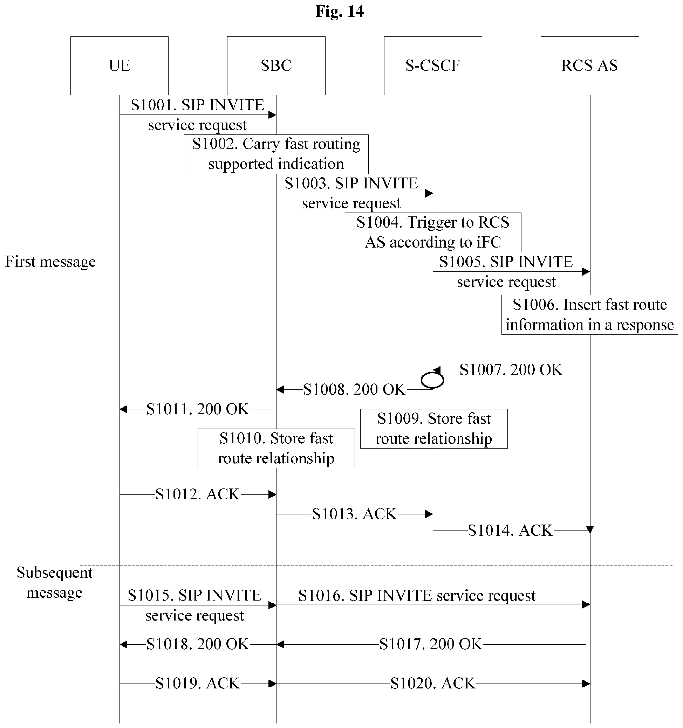

Fig. 14 is another exemplary flowchart of implementation of a fast routing mechanism, in which an SBC sends a request to an RCS AS, in a Large message service according to some embodiments of the present application. In the exemplary embodiment, information transfer is achieved in a response manner. The fast route information is transferred by adding a specific header in the response message, and the header can be defined as required, which is not limited in the embodiments of the present application.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 14, in the example, the flow of the fast routing mechanism, in which an SBC sends a request to an RCS AS, in a Large message service may include operations S1001 to S1020.

At S1001, an originating UE initiates an SIP INVITE service request.

At S1002 to S1003, when receiving the SIP INVITE service request initiated by the originating UE for the first time, an originating SBC checks the fast route relationship corresponding to the user but fails to find the corresponding fast route information, and therefore selects to perform routing according to a normal signaling routing mechanism. The originating SBC forwards, according to information of an originating S-CSCF recorded during registration, the SIP INVITE service request to the originating S-CSCF, and carries, in the SIP INVITE service request, fast routing supported indication information, for example, Supported: fast-route, for indicating that the originating SBC supports fast routing and forwarding of signaling.

At S1004 to S1005, the originating S-CSCF selects an RCS AS according to an initial filtering rule (e.g., Initial Filter Criteria (iFC)) subscribed by the user, and forwards the SIP INVITE service request carrying the fast routing supported indication information to the RCS AS.

At S1006 to S1007, the RCS AS determines that the originating SBC supports fast routing of signaling, inserts specific header information carrying fast route information, for example, X-Fast-Route: <10.41.25.11:5260>, in a response, and returns a message successful reception response (e.g., 200 OK response) to the S-CSCF. The fast route information may include information of the RCS AS.

At S1008, after receiving the 200 OK response, the S-CSCF checks the local fast routing policy (determines whether it is allowed to execute fast routing), and when it is allowed to execute fast routing, the S-CSCF directly forwards the 200 OK response to the originating SBC without deleting the fast route information.

At S1009, the S-CSCF may locally store the fast route information, and establish a fast route relationship between the service information and the fast route information (for example, a corresponding relationship between the SIP INVITE type message of the user and the RCS AS), so as to facilitate subscription by other network elements.

At S1010, after receiving the 200 OK response, the originating SBC extracts the fast route information from the specific header information of the response, and locally establishes and stores the fast route relationship between the SIP INVITE type message of the user and the RCS AS.

At S1011, after deleting the fast route information in the 200 OK response, the originating SBC forwards the 200 OK response to the originating UE to complete the message service request of the first time.

At S1012, the originating UE sends an acknowledgement (ACK) request to the originating SBC, indicating that the session is established.

At S1013, the originating SBC forwards the ACK request to the S-CSCF.

At S1014, the S-CSCF forwards the ACK request to the RCS AS, and the first session is successfully established.

At S1015, when the originating SBC receives an SIP INVITE service request from the originating UE again, the originating SBC checks the fast route relationship corresponding to the user, finds that the current message service request meets the service features in the local fast route relationship, and extracts the corresponding RCS AS information.

At S1016, the originating SBC directly forwards the SIP INVITE service request to the RCS AS without the forwarding through the S-CSCF.

At S1017, the RCS AS returns a successful reception response (e.g., a 200 OK response) to the originating SBC.

At S1018, the originating SBC forwards the 200 OK response to the originating UE.

At S1019, the originating UE forwards the ACK request to the originating SBC.

At S1020, the originating SBC forwards the ACK request to the RCS AS, and the delivery of the message is completed.

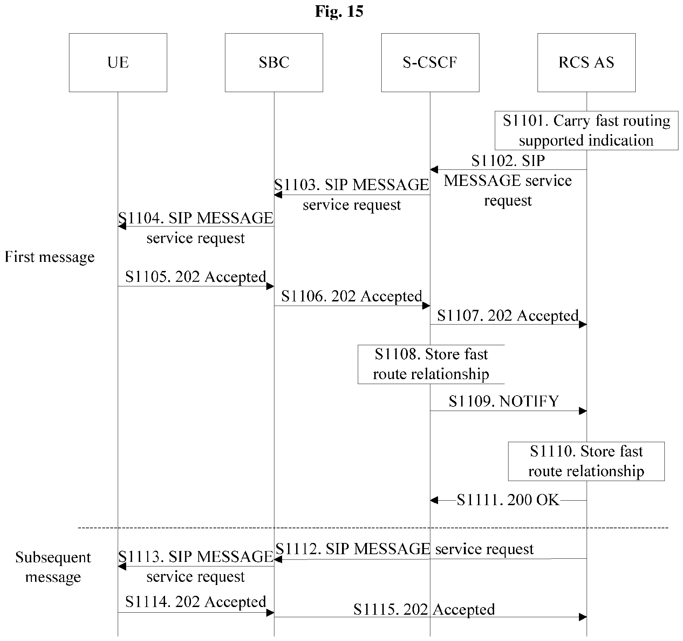

Fig. 15 is an exemplary flowchart of implementation of a fast routing mechanism, in which an RCS AS sends a request to an SBC, in a Page message service according to some embodiments of the present application. In the exemplary embodiment, information transfer is implemented in a subscription-notification manner. The S-CSCF sends the fast route information to the RCS AS through a notification mechanism.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 15, in the example, the process of the fast routing mechanism, in which an RCS AS sends a request to an SBC, in a Page message service may include operations S1101 to S1115.

At S1101 to S1102, a terminating RCS AS sends an SIP MESSAGE service request to a terminating UE for the first time, checks a fast route relationship corresponding to the user but finds no corresponding fast route information, and therefore selects to perform routing according to a normal signaling routing mechanism. The terminating RCS AS forwards, according to information of a terminating S-CSCF recorded during registration, the SIP MESSAGE service request to the terminating S-CSCF, and carries, in the SIP MESSAGE service request, fast routing supported indication information for indicating that the terminating RCS AS supports fast routing and forwarding of signaling.

At S1103, the terminating S-CSCF forwards, according to information of an SBC recorded during the user registration, the SIP MESSAGE service request to the SBC.

At S1104, the SBC forwards the SIP MESSAGE service request to the terminating UE.

At S1105, the terminating UE returns a message successful reception response (e.g., 202 Accepted response) to the SBC.

At S1106, the SBC returns the 202 Accepted response to the S-CSCF.

At S1107, the S-CSCF forwards the 202 Accepted response to the RCS AS.

At S1108 to S1109, after receiving the 202 Accepted response, the S-CSCF updates the fast route relationship of the user, judges that the RCS AS subscribes to the fast route relationship of the terminating user, and sends an SIP NOTIFY message to the RCS AS to notify of the newly established fast route relationship. The fast route relationship may include: the application type of the fast route information (an originating side, a terminating side, NNI (Network to Network Interface), interworking, etc.), a service type corresponding to the fast route information (text, image, session message, file transmission, etc.), and fast route information (fast routing sequence information, information of each network element in a fast route path, and the like).

At S1110, the terminating RCS AS receives the NOTIFY message, extracts the fast route relationship (for example, the correspondence between the SBC and the message service of the user) from the NOTIFY message, and locally stores the fast route relationship.

At S1111, the terminating RCS AS returns a 200 OK response indicating receipt of the NOTIFY message.

At S1112, when the terminating RCS AS sends an SIP MESSAGE service request to the terminating UE again, the terminating RCS AS checks a fast route relationship of the user, finds that the current message service request satisfies service features in the local fast route relationship, and extracts corresponding information of the SBC. The terminating RCS AS directly forwards the SIP MESSAGE service request to the SBC, without the forwarding through the S-CSCF.

At S1113, the SBC forwards the SIP MESSAGE service request to the UE.

At S1114, the UE returns a 202 Accepted response to the SBC.

At S1115, the SBC returns the 202 Accepted response to the RCS AS to complete message delivery.

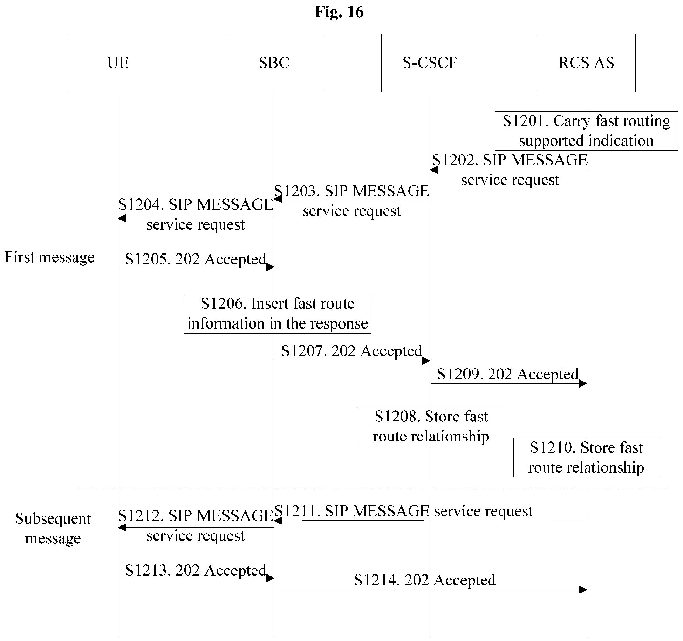

Fig. 16 is another exemplary flowchart of implementation of a fast routing mechanism, in which an RCS AS sends a request to an SBC, in a Page message service according to some embodiments of the present application. In the exemplary embodiment, information transfer is achieved in a response manner. The fast route information is transferred by adding a specific header in the response message, and the header can be defined as required, which is not limited in the embodiments of the present application.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 16, in the example, the flow of the fast routing mechanism, in which an RCS AS sends a request to an SBC, in a Page message service may include operations S1201 to S1214.

At S1201 to S1202, when a terminating RCS AS initiates an SIP MESSAGE service request to a terminating UE for the first time, the terminating RCS AS checks a fast route relationship corresponding to the user but fails to find corresponding fast route information, and therefore selects to perform routing according to a normal signaling routing mechanism. The terminating RCS AS forwards, according to information of a terminating S-CSCF recorded during registration, the SIP MESSAGE service request to the terminating S-CSCF, and carries, in the SIP MESSAGE service request, fast routing supported indication information for indicating that the terminating RCS AS supports fast routing and forwarding of signaling.

At S1203, the terminating S-CSCF forwards, according to information of an SBC recorded during the user registration, the SIP MESSAGE service request to the SBC.

At S1204, the SBC forwards the SIP MESSAGE service request to the terminating UE.

At S1205, the terminating UE returns a message successful reception response (e.g., 202 Accepted response) to the SBC.

At S1206 to S1207, the terminating SBC determines that the terminating RCS AS supports fast routing of signaling, and inserts specific header information carrying the fast route information, for example, X-Fast-Route: <10.41.25.10:5260>, in the 202 Accepted response, and forwards the 202 Accepted response to the S-CSCF.

At S1208 to S1209, after receiving the 202 Accepted response, the terminating S-CSCF checks the local fast routing policy and finds that it is allowed to perform fast routing, locally establishes a fast route relationship between the service information and the fast route information to facilitate subscription by other network elements, and then forwards the 202 Accepted response to the RCS AS.

At S1210, after receiving the 202 Accepted response, the terminating RCS AS extracts the fast route information from the specific header information, and locally establishes a fast route relationship between the SIP MESSAGE type message of the user and the SBC.

At S1211, when the terminating RCS AS sends an SIP MESSAGE service request to the terminating UE again, the terminating RCS AS checks the fast route relationship of the user, finds that the current message service request satisfies service features in the local fast route relationship, and extracts corresponding information of the SBC. The terminating RCS AS directly forwards the SIP MESSAGE service request to the SBC, without the forwarding through the S-CSCF.

At S1212, the terminating SBC forwards the SIP MESSAGE service request to the terminating UE.

At S1213, the terminating UE returns a message successful reception response (e.g., 202 Accepted response) to the SBC.

At S1214, the SBC returns the 202 Accepted response to the RCS AS, and the message delivery is completed.

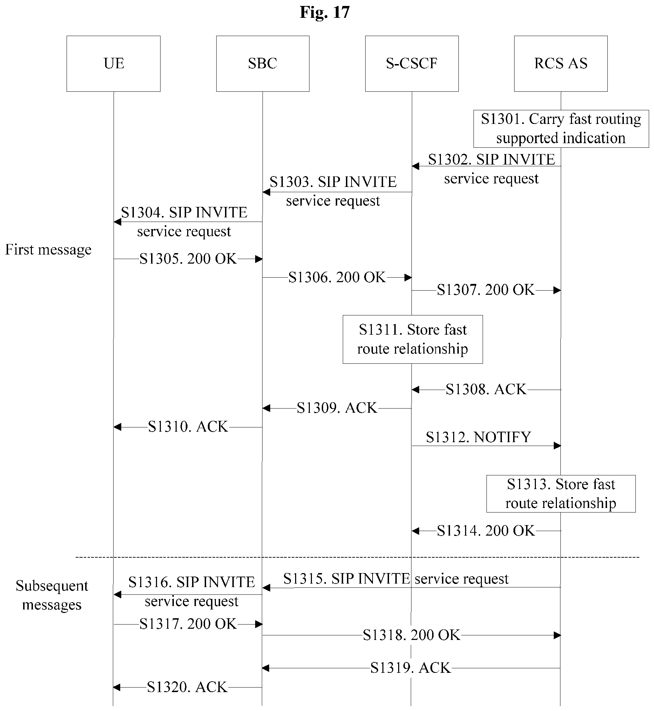

Fig. 17 is an exemplary flowchart of implementation of a fast routing mechanism, in which an RCS AS sends a request to an SBC, in a Large message service according to some embodiments of the present application. In the exemplary embodiment, information transfer is implemented in a subscription-notification manner. The S-CSCF sends the fast route information to the RCS AS through a notification mechanism.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 17, in the example, the process of the fast routing mechanism, in which an RCS AS sends a request to an SBC, in a Large message service may include operations S1301 to S1320.

At S1301 to S1302, when a terminating RCS AS sends an SIP INVITE service request to a terminating UE for the first time, the terminating RCS AS checks a fast route relationship corresponding to the user but fails to find corresponding fast route information, and therefore selects to perform routing according to a normal signaling routing mechanism. The terminating RCS AS forwards, according to information of a terminating S-CSCF recorded during registration, the SIP INVITE service request to the terminating S-CSCF, and carries, in the SIP INVITE service request, fast routing supported indication information for indicating that the terminating RCS AS supports fast routing and forwarding of signaling.

At S1303, the terminating S-CSCF selects an SBC according to information during user registration, and forwards the SIP INVITE service request to the SBC.

At S1304, the SBC forwards the SIP INVITE service request to the terminating UE.

At S1305, the terminating UE returns a 200 OK response to the terminating SBC.

At S1306, the terminating SBC forwards the 200 OK response to the terminating S-CSCF.

At S1307, the terminating S-CSCF forwards the 200 OK response to the terminating RCS AS.

At S1308, the terminating RCS AS sends an ACK message to the S-CSCF, indicating that the session is established.

At S1309, the S-CSCF forwards the ACK request to the SBC.

At S1310, the SBC forwards the ACK request to the UE, and the first session is successfully established.

At S1311 to S1312, after receiving the 200 OK response, the S-CSCF updates the fast route relationship of the user, judges that the RCS AS subscribes to the fast route relationship, and sends an SIP NOTIFY message to the RCS AS to notify of the newly established fast route relationship. The fast route relationship may include: the application type of the fast route information (an originating side, a terminating side, NNI (Network to Network Interface), interworking, etc.), a service type corresponding to the fast route information (text, image, session message, file transmission, etc.), and fast route information (fast routing sequence information, information of each network element in a fast route path, and the like).

At S1313, the terminating RCS AS receives the NOTIFY message, extracts the fast route relationship (for example, the correspondence between the SBC and the message service of the user) from the NOTIFY message, and locally stores the fast route relationship.

At S1314, the terminating RCS AS returns a 200 OK response, indicating that the NOTIFY message is received.

At S1315, when the terminating RCS AS sends an SIP INVITE service request to the terminating UE again, the terminating RCS AS checks a fast route relationship of the user, finds that the current message service request satisfies service features in the local fast route relationship, and extracts corresponding information of the SBC. The terminating RCS AS directly forwards the SIP INVITE service request to the SBC without the forwarding through the S-CSCF.

At S1316, the SBC forwards the SIP INVITE service request to the UE.

At S1317, the UE returns a 200 OK response to the SBC.

At S1318, the SBC returns the 200 OK response to the terminating RCS AS.

At S1319, the terminating RCS AS sends an ACK request to the SBC.

At S1320, the SBC forwards the ACK request to the UE, and the session is successfully established.

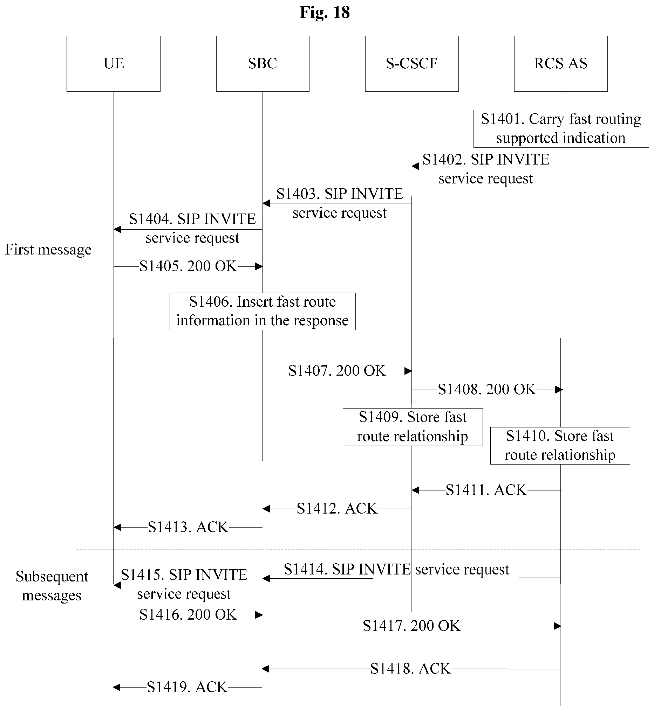

Fig. 18 is another exemplary flowchart of implementation of a fast routing mechanism, in which an RCS AS sends a request to an SBC, in a Large message service according to some embodiments of the present application. In the exemplary embodiment, information transfer is achieved in a response manner. The fast route information is transferred by adding a specific header in the response message, and the header can be defined as required, which is not limited in the embodiments of the present application.

It should be noted that, the exemplary embodiment is described by taking the using of an SIP protocol as a signaling routing protocol as an example, however, the embodiments of the present application have no limitation on the type of used signaling routing protocol. In other implementations, the method is equally applicable to other protocols.

As shown in Fig. 18, in the example, the flow of the fast routing mechanism, in which an RCS AS sends a request to an SBC, in a Large message service may include operations S1401 to S1419.

At S1401 to S1402, when a terminating RCS AS sends an SIP INVITE service request to a terminating UE for the first time, the terminating RCS AS checks a fast route relationship corresponding to the user but fails to find corresponding fast route information, and therefore selects to perform routing according to a normal signaling routing mechanism. The terminating RCS AS forwards, according to information of a terminating S-CSCF recorded during registration, the SIP INVITE service request to the terminating S-CSCF, and carries, in the SIP INVITE service request, fast routing supported indication information, for example, Supported: fast-route, for indicating that the terminating RCS AS supports fast routing and forwarding of signaling.

At S1403, the terminating S-CSCF selects an SBC according to information during user registration, and forwards the SIP INVITE service request to the SBC.

At S1404, the terminating SBC forwards the SIP INVITE to the terminating UE.

At S1405, the terminating UE returns a 200 OK response to the terminating SBC.

At S1406 to S1407, the terminating SBC determines that the terminating RCS AS supports fast routing of signaling, inserts specific header information carrying the fast route information, for example, X-Fast-Route: <10.41.25.11:5260>, in the 200 OK response, and returns the response 200 OK for successful reception to the S-CSCF.

At S1408 to S1409, after receiving the 200 OK response, the terminating S-CSCF checks the local fast routing policy and finds that it is allowed to perform fast routing, and forwards the 200 OK response directly to the terminating RCS AS without deleting the fast route information. As an exemplary implementation, the terminating S-CSCF locally stores the fast route information, and establishes a fast route relationship between the service information and the fast route information so as to facilitate the subscription by other network elements.

At S1410, the terminating RCS AS extracts the fast route information from the specific header in the 200 OK response, and locally establishes a correspondence between the SIP INVITE type message and the SBC.

At S1411, the terminating RCS AS returns an ACK request to the terminating S-CSCF.

At S1412, the terminating S-CSCF forwards the ACK request to the terminating SBC.

At S1413, the terminating SBC forwards the ACK request to the terminating UE, and the delivery of the first message is completed.

At S1414, when the terminating RCS AS sends an SIP INVITE service request to the terminating UE again, the terminating RCS AS checks a fast route relationship of the user, finds that the current message service request satisfies service features in the local fast route relationship, and extracts corresponding information of the SBC. The terminating RCS AS directly forwards the SIP INVITE to the SBC without the forwarding through the S-CSCF.

At S1415, the terminating SBC forwards the SIP INVITE service request to the terminating UE.

At S1416, the terminating UE returns a 200 OK response to the terminating SBC.

At S1417, the terminating SBC forwards the 200 OK response to the terminating RCS AS.

At S1418, the terminating RCS AS sends an ACK request to the SBC.

At S1419, the terminating SBC forwards the ACK request to the UE, and the delivery of the message is completed.

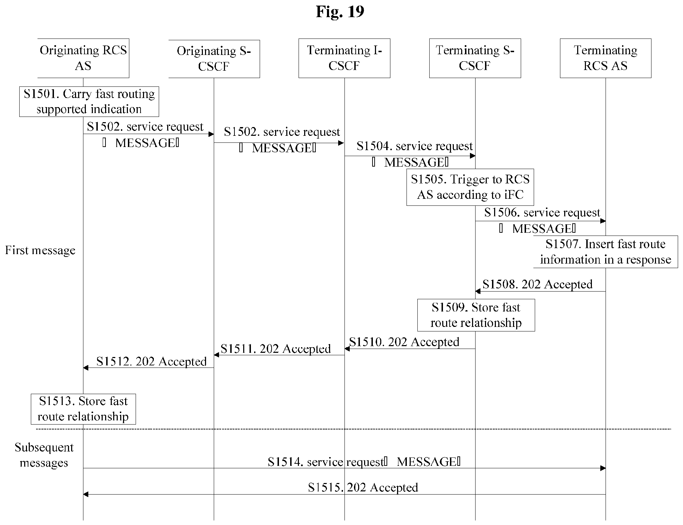

Fig. 19 is an exemplary flowchart of implementation of a fast routing mechanism among different RCS ASs according to some embodiments of the present application. In the exemplary embodiment, information transfer is achieved in a response manner. The fast route information is transferred by adding a specific header in the response message, and the header can be defined as required, which is not limited in the embodiments of the present application.

In the embodiment, a Page message is taken as an example for description, and the service flow for other types of messages are the same as the service flow for the Page message.

It should be noted that, the exemplary embodiment is described by taking the using of an SIP protocol as a signaling routing protocol as an example, however, the embodiments of the present application have no limitation on the type of used signaling routing protocol, and other protocols are also applicable in other implementations.

As shown in Fig. 19, in the example, the fast routing implemented between different RCS ASs in the same network includes operations S1501 to S1515.

At S1501 to S1502, when an originating RCS AS sends an SIP MESSAGE service request to a terminating side for the first time, the originating RCS AS checks a corresponding fast route relationship of the user but fails to find the corresponding fast route information, and therefore selects to perform routing according to a normal signaling routing mechanism. The originating RCS AS forwards, according to information of an originating S-CSCF recorded during registration, the SIP MESSAGE service request to the originating S-CSCF, and carries, in the SIP MESSAGE service request, fast routing supported indication information, for example, Supported: fast-route, for indicating that the originating RCS AS supports fast routing and forwarding of signaling.

At S1503, the originating S-CSCF performs a query in an ENUM (Telephone Number Mapping working group) or a DNS (Domain Name System) to acquire the terminating I-CSCF to which the terminating user belongs, and forwards the SIP MESSAGE service request to the terminating I-CSCF.

At S1504, the terminating I-CSCF performs a query in an HSS (Home Subscriber Server) to acquire the S-CSCF to which the terminating user belongs, and forwards the SIP MESSAGE service request to the terminating S-CSCF.

At S1505 to S1506, the terminating S-CSCF selects an RCS AS according to an initial filtering rule (e.g., Initial Filter Criteria (iFC)) subscribed by the terminating user, and forwards the SIP MESSAGE request to the RCS AS.

At S1507 to S1508, the RCS AS determines that the originating RCS AS supports fast routing of signaling, and inserts specific header information, for example, X-Fast-Route: <10.41.25.11:5260>, in a response, and returns a message successful reception response (e.g., 202 Accepted response) to the terminating S-CSCF.

At S1509 to S1510, after receiving the 202 Accepted response, the terminating S-CSCF checks a local fast routing strategy and finds it is allowed to perform fast routing, and directly forwards the response to the terminating I-CSCF without deleting the fast route information. As an exemplary implementation, the terminating S-CSCF may locally store the fast route information, and establish a fast route relationship between the service information and the fast route information, for example, a correspondence between the service message of the user and the terminating RCS AS, so as to facilitate subscription by other network elements.

At S1511, the terminating I-CSCF forwards the 202 Accepted response to the originating S-CSCF.

At S1512, after receiving the 202 Accepted response, the originating S-CSCF checks the local fast routing policy and finds that it is allowed to perform fast routing, does not delete the fast route information, and forwards the 202 Accepted response to the originating RCS AS.

At S1513, the originating RCS AS extracts the fast route information from the specific header of the 202 Accepted response, and locally establishes a corresponding relationship between the SIP MESSAGE type message of the user and the terminating RCS AS.

At S1514, when the originating RCS AS receives an SIP MESSAGE service request of the originating UE again, the originating RCS AS checks the fast route relationship of the user, finds that the current message service request satisfies the service features in the local fast route relationship, and extracts the corresponding information of the terminating RCS AS. The originating RCS AS directly forwards the SIP MESSAGE service request to the terminating RCS AS, without the forwarding through the S-CSCF or the I-CSCF.

At S1515, the terminating RCS AS returns a message successful reception response (e.g., 202 Accepted response) to the originating RCS AS, and the delivery of the message is completed.

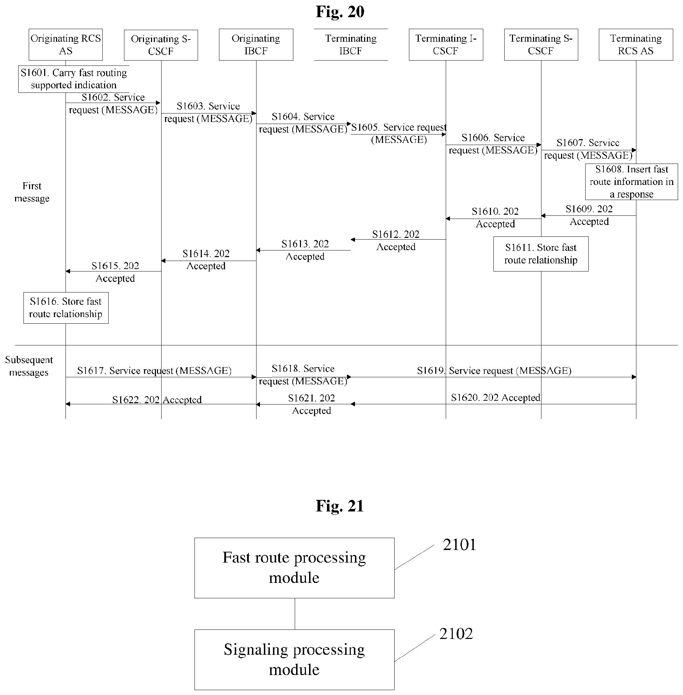

Fig. 20 is an exemplary flowchart of implementation of a fast routing mechanism among different networks according to some embodiments of the present application. In the exemplary embodiment, information transfer is achieved in a response manner. The fast route information is transferred by adding a specific header in the response message, and the header can be defined as required, which is not limited in the embodiments of the present application.

In the embodiment, a Page message is taken as an example for description, and the service flow for other types of messages are the same as the service flow for the Page message.

It should be noted that, the exemplary embodiment is described by taking the using of an SIP protocol as a signaling routing protocol as an example, however, the embodiments of the present application have no limitation on the type of used signaling routing protocol, and other protocols are also applicable in other implementations.

As shown in Fig. 20, in the example, the fast routing implemented among different networks may include operations S1601 to S1622.

At S1601 to S1602, when an originating RCS AS sends an SIP MESSAGE service request to a terminating side for the first time, the originating RCS AS checks a corresponding fast route relationship of the user but fails to find the corresponding fast route information, and therefore selects to perform routing according to a normal signaling routing mechanism. The originating RCS AS forwards, according to information of an originating S-CSCF recorded during registration, the SIP MESSAGE service request to the originating S-CSCF, and carries, in the SIP MESSAGE service request, fast routing supported indication information.

At S1603, the originating S-CSCF performs a query in an ENUM or a DNS of the current network but fails to find the terminating user, and therefore sends the SIP MESSAGE service request to an Interconnection Border Control Function (IBCF) of the local network according to the local policy.

At S1604, the originating IBCF checks and finds that fast routing is supported by the originating side, and therefore adds the information of the local network element to the SIP MESSAGE service request and forwards the SIP MESSAGE service request to the terminating IBCF.

At S1605, the terminating IBCF checks and finds that fast routing is supported by the originating side, adds the information of the local network element to the SIP MESSAGE service request, and forwards the SIP MESSAGE service request to the terminating I-CSCF.

At S1606, the terminating I-CSCF performs a query in the HSS to acquire the S-CSCF to which the terminating user belongs, and forwards the SIP MESSAGE request to the terminating S-CSCF.

At S1607, the terminating S-CSCF selects the RCS AS according to an initial filtering rule (e.g., Initial Filter Criteria (iFC)) subscribed by the terminating user, and forwards the SIP MESSAGE service request to the terminating RCS AS.

At S1608 to S1609, the terminating RCS AS determines that the originating RCS AS supports fast routing of signaling, carries fast route information in a message successful reception response (e.g., 202 Accepted response), and sends the202 Accepted response to the terminating S-CSCF. The fast route information may include information of the terminating RCS AS.

At S1610 to S1611, after receiving the 202 Accepted response, the terminating S-CSCF checks the local fast routing policy and finds that it is allowed to perform fast routing, and therefore does not delete the fast route information and directly forwards the 202 Accepted response to the I-CSCF. As an exemplary implementation, the terminating S-CSCF may locally store the fast route information, and establish a fast route relationship between the service information and the fast route information, so as to facilitate the subscription by other network elements.

At S1612, the terminating I-CSCF forwards the 202 Accepted response to the terminating IBCF.

At S1613, the terminating IBCF checks that the originating side supports fast routing, and therefore adds information of the terminating IBCF to the fast route information in the 202 Accepted response, and forwards the 202 Accepted response to the originating IBCF.

At S1614, the originating IBCF checks that the originating side supports fast routing, and therefore adds information of the originating IBCF to the fast route information in the 202 Accepted response, and forwards the 202 Accepted response to the originating S-CSCF.

At S1615, after receiving the 202 Accepted response, the originating S-CSCF checks the local fast routing policy and finds that it is allowed to perform fast routing, and therefore does not delete the fast route information and forwards the 202 Accepted response to the RCS AS.

At S1616, the originating RCS AS extracts the fast route information from the 202 Accepted response, and locally establishes a corresponding relationship between the SIP MESSAGE service request type message and the fast route information.

At S1617 to S1619, the originating RCS AS receives an SIP MESSAGE service request from the originating UE again, and delivers the SIP MESSAGE request through a path from the originating RCS AS, to the originating IBCF, further to the terminating IBCF, and further to the terminating RCS AS, without the forwarding through the S-CSCF and the I-CSCF.

At S1620 to S1622, the terminating RCS AS returns a message successful reception response (e.g., 202 Accepted response) through a path from the terminating RCS AS, to the terminating IBCF, further to the originating IBCF, and further to the originating RCS AS, so as to complete message delivery.

Fig. 21 is a schematic diagram of a device for realizing signaling routing in rich communication according to some embodiments of the present application. As shown in Fig. 21, the device for realizing signaling routing in rich communication provided in the embodiments may be applied to an SBC or RCS AS, and includes:
a fast route processing module 2101, configured to search, in a fast route relationship between service information and fast route information, for fast route information corresponding to a received service request or a received service response; and
a signaling processing module 2102, configured to forward the service request or the service response according to the found fast route information.

In an exemplary embodiment, the service information may include: user information corresponding to a service, a service type (text, image, session message, file transmission, etc.), service features, etc. The fast route information may include information such as routing sequence information of a fast route and information of each network element on a message delivery path. In the exemplary embodiment, after receiving a service request or a service response, the fast route processing module 2101 may search, in a fast route relationship according to service information of the service request or the service response, for fast route information corresponding to the service information, and then the signaling processing module 2102 may forward the service request or the service response according to the found fast route information.

When the device provided in the embodiments is applied to an SBC, for functions of the fast route processing module 2101 and the signaling processing module 2102, reference may be made to descriptions about the first fast route processing module 101 and the first signaling processing module 102 in Fig. 1, which is not repeated herein.

When the device provided in the embodiments is applied to an RCS AS, for functions of the fast route processing module 2101 and the signaling processing module 2102, reference may be made to descriptions about the second fast route processing module 116 and the second signaling processing module 117 in Fig. 1, which are not repeated herein.

For other related descriptions about the device provided in the embodiments of the present application, reference may be made to the descriptions about the foregoing method embodiments, and therefore, details are not repeatedly described herein.

In addition, the embodiments of the present application also provide a device for realizing signaling routing in rich communication, which can be applied to a CSCF. The device includes: an information acquisition module, configured to acquire fast route information according to a service triggering situation, and determine a fast route relationship between service information and the fast route information; and a pushing module, configured to push the fast route relationship to a corresponding SBC or RCS AS. For other descriptions about the device provided in the embodiment, reference may be made to the descriptions about the method embodiment at the CSCF side, and no further details are provided herein.

In addition, the embodiments of the present application further provide an SBC, including: a memory and a processor, wherein the memory is configured to store a computer program, and when the computer program is executed by the processor, the operations of the described method from the perspective of the SBC are implemented, for example, the operations shown in Fig. 2.

The embodiments of the present application also provide a CSCF, including a memory and a processor, wherein the memory is configured to store a computer program, and when the computer program is executed by the processor, the operations of the described method from the perspective of the CSCF are implemented, for example, the operations shown in Fig. 8.

The embodiments of the present application also provide an RCS AS, including a memory and a processor, wherein the memory is configured to store a computer program, and when the computer program is executed by the processor, the operations of the described method from the perspective of the RCS AS are implemented, such as the operations shown in Fig. 4.

In addition, the embodiments of the present application also provide a computer-readable storage medium, which stores a computer program, wherein when the computer program is executed, the operations of the method as described above are implemented, for example, the operations shown in Figs. 2, 4 or 8.

Those having ordinary skill in the art can appreciate that all or some of the operations of the methods, and all or some of the functional blocks/units of the systems and devices disclosed above can be implemented as software, firmware, hardware, and any suitable combination thereof. In a hardware implementation, the division between functional modules/units referred to in the above description does not necessarily correspond to the division of physical modules. For example, one physical module may have multiple functions, or one function or operation may be cooperatively performed by several physical modules. Some or all modules may be implemented as software executed by a processor, such as a digital signal processor or microprocessor, or as hardware, or as an integrated circuit, such as an application specific integrated circuit. Such software may be distributed on computer-readable media, which may include computer storage media (or non-transitory media) and communication media (or transitory media).

## Claims

1. A method for realizing signaling routing in rich communication, comprising the following operations performed by a Session Border Controller, SBC, or a Rich Communication Suite Application Server, RCS AS:
searching (S11, S21), in a locally stored fast route relationship between service information and fast route information, for fast route information corresponding to a received service request or a received service response, wherein the fast route information indicates a message delivery path through which the received service request or the received service response is transmitted without being forwarded through a Call Session Control Function, CSCF; and
forwarding (S12, S22) the service request or the service response according to the found fast route information.

2. The method according to claim 1, further comprising the following operations performed by the SBC or the RCS AS:
in a case where the SBC or the RCS AS fails to find, in the fast route relationship, the fast route information corresponding to the service request or the service response, adding indication information indicating that fast routing is supported to the service request or the service response, and forwarding the service request or the service response carrying the indication information indicating that the fast routing is supported to a Call Session Control Function, CSCF.

3. The method according to claim 1, further comprising the following operations performed by the SBC or the RCS AS:
adding, after receiving a service request carrying indication information indicating that fast routing is supported forwarded by a Call Session Control Function, CSCF, fast route information into a service response corresponding to the service request, and returning, by the SBC or the RCS AS, the service response carrying the fast route information to the CSCF.

4. The method according to claim 1, further comprising the following operations performed by the SBC or the RCS AS:
extracting, after receiving a service request or a service response carrying fast route information, the fast route information from the service request or the service response, and storing the fast route information; or,
extracting, after receiving a service request or a service response carrying a fast route relationship, the fast route relationship from the service request or the service response, and storing the fast route relationship, wherein the fast route relationship is added into the service request or the service response by the CSCF.

5. The method according to claim 1, further comprising the following operations performed by the SBC or the RCS AS:
sending a subscription request to the CSCF to subscribe to the fast route relationship related to the SBC or the RCS AS; and
receiving a notification message carrying the fast route relationship sent by the CSCF, and storing the received fast route relationship.

6. The method according to claim 1, wherein the service information comprises: user information corresponding to a service, a service type and service features.

7. The method according to claim 1, wherein the fast route information comprises routing sequence information of a fast route and information of each network element on a message delivery path, wherein the network element comprises one of: the SBC, the RCS AS, or an Interconnection Border Control Function, IBCF.

8. A method for realizing signaling routing in rich communication, comprising the following operations performed by a Call Session Control Function, CSCF:
extracting fast route information from a received service response carrying the fast route information; or, determining, according to a forwarding situation of a service request and a service response corresponding to the service request, the fast route information corresponding to the service request and the service response, wherein the fast route information indicates a message delivery path through which a subsequent service request or a subsequent service response of a Session Border Controller, SBC, or a Rich Communication Suite Application Server, RCS AS, is transmitted without being forwarded through the CSCF;
determining a fast route relationship between service information and the fast route information; and
pushing (S32) the fast route relationship to the corresponding SBC or RCS AS.

9. The method according to claim 8, wherein pushing (S32) the fast route relationship to a corresponding SBC or RCS AS comprises:
pushing, to the SBC or the RCS AS sending a subscription request, a notification message carrying the subscribed fast route relationship;
pushing, by the CSCF, updated fast route relationship to the SBC or the RCS AS in a case where the fast route relationship subscribed to by the SBC or the RCS AS changes.

10. The method according to claim 8, wherein pushing (S32) the fast route relationship to a corresponding SBC or RCS AS comprises:
adding, to a service request or a service response to be forwarded to the SBC or the RCS AS, the fast route information corresponding to the service request or the service response, and forwarding the service request or the service response carrying the fast route information to the SBC or the RCS AS; or,
adding the fast route relationship to a service request or a service response to be forwarded to the SBC or the RCS AS, and forwarding the service request or the service response carrying the fast route relationship to the SBC or the RCS AS.

11. The method according to claim 8, further comprising at least one of the following operations performed by the CSCF:
after receiving a service request or a service response carrying fast route information, determining, according to a local fast routing policy, whether fast route is allowed, and in a case of determining that fast routing is not allowed, deleting the carried fast route information from the service request or the service response, and forwarding the service request or the service response not carrying the fast route information; and in a case of determining that fast routing is allowed, forwarding the service request or the service response carrying the fast route information; and
after receiving a service request or a service response carrying indication information indicating that fast routing is supported, determining, according to a local fast routing policy, whether fast route is allowed; in a case of determining that fast routing is not allowed, deleting the carried indication information indicating that fast routing is supported from the service request or the service response, and forwarding the service request or the service response not carrying the indication information indicating that the fast routing is supported; and in a case of determining that fast routing is allowed, forwarding the service request or the service response carrying the indication information indicating that the fast routing is supported.

12. A device for realizing signaling routing in rich communication, applied to a Session Border Controller, SBC, or a Rich Communication Suite Application Server, RCS AS and comprising:
a fast route processing module (2101), configured to search, in a locally stored fast route relationship between service information and fast route information, for fast route information corresponding to a received service request or a received service response, wherein the fast route information indicates a message delivery path through which the received service request or the received service response is transmitted without being forwarded through a Call Session Control Function, CSCF; and
a signaling processing module (2102), configured to forward the service request or the service response according to the found fast route information.

13. A device for realizing signaling routing in rich communication, applied to a Call Session Control Function, CSCF and comprising:
an information acquisition module, configured to extract fast route information from a received service response carrying the fast route information; or, determine, according to a forwarding situation of a service request and a service response corresponding to the service request, the fast route information corresponding to the service request and the service response, wherein the fast route information indicates a message delivery path through which a subsequent service request or a subsequent service response of a Session Border Controller, SBC, or a Rich Communication Suite Application Server, RCS AS, is transmitted without being forwarded through a Call Session Control Function, CSCF; and
a pushing module, configured to push the fast route relationship to the corresponding SBC or RCS AS.

14. A computer-readable storage medium, storing a computer program which, when executed, implements the operations of the method according to any one of claims 1 to 7.

15. A computer-readable storage medium, storing a computer program which, when executed, implements the operations of the method according to any one of claims 8 to 11.

## Patentansprüche

1. Verfahren zur Realisierung von Signalisierungsrouting in einer Rich-Kommunikation, umfassend die folgenden Operationen, die von einer Sitzungsgrenzsteuerung ( SBC) oder einem Rich-Kommunikationssuite-Anwendungsserver (RCS AS) durchgeführt werden:
Suchen (S11, S21) in einer lokal gespeicherten Fast-Route-Beziehung zwischen Dienstinformationen und Fast-Route-Informationen nach Fast-Route-Informationen, die einer empfangenen Dienstanforderung oder einer empfangenen Dienstantwort entsprechen, wobei die Fast-Route-Informationen einen Nachrichtenübermittlungspfad angeben, über den die empfangene Dienstanforderung oder die empfangene Dienstantwort übertragen wird, ohne über eine Anrufsitzungssteuerungsfunktion (CSCF) weitergeleitet zu werden; und
Weiterleiten (S12, S22) der Dienstanforderung oder der Dienstantwort nach den gefundenen Fast-Route-Informationen.

2. Verfahren nach Anspruch 1, ferner umfassend die folgenden Operationen, die von der SBC oder dem RCS AS durchgeführt werden:
in einem Fall, in dem die SBC oder der RCS AS in der Fast-Route-Beziehung die der Dienstanforderung oder der Dienstantwort entsprechenden Fast-Route-Informationen nicht finden kann, Hinzufügen von Anzeigeinformationen, die anzeigen, dass Fast-Routing unterstützt wird, zu der Dienstanforderung oder der Dienstantwort, und Weiterleiten der Dienstanforderung oder der Dienstantwort, die die Anzeigeinformationen tragen, die anzeigen, dass das Fast-Routing unterstützt wird, an eine Anrufsitzungssteuerungsfunktion, CSCF.

3. Verfahren nach Anspruch 1, ferner umfassend die folgenden Operationen, die von der SBC oder dem RCS AS durchgeführt werden:
Einfügen, nach dem Empfangen einer Dienstanforderung, die Anzeigeinformationen trägt, die anzeigen, dass Fast-Routing unterstützt wird, weitergeleitet durch eine Anrufsitzungssteuerungsfunktion (CSCF), von Fast-Route-Informationen in eine Dienstantwort, die der Dienstanforderung entspricht, und Zurücksenden, durch die SBC oder den RCS AS, der Dienstantwort, die die Fast-Route-Informationen trägt, an die CSCF.

4. Verfahren nach Anspruch 1, ferner umfassend die folgenden Operationen, die von der SBC oder dem RCS AS durchgeführt werden:
Extrahieren der Fast-Route-Informationen aus der Dienstanforderung oder der Dienstantwort nach dem Empfangen einer Dienstanforderung oder einer Dienstantwort, die Fast-Route-Informationen trägt, und Speichern der Fast-Route-Informationen; oder,
Extrahieren der Fast-Route-Beziehung aus der Dienstanforderung oder der Dienstantwort nach dem Empfangen einer Dienstanforderung oder einer Dienstantwort, die eine Fast-Route-Beziehung trägt, und Speichern der Fast-Route-Beziehung, wobei die Fast-Route-Beziehung durch die CSCF in die Dienstanforderung oder die Dienstantwort eingefügt wird.

5. Verfahren nach Anspruch 1, ferner umfassend die folgenden Operationen, die von der SBC oder dem RCS AS durchgeführt werden:
Senden einer Abonnementanforderung an die CSCF, um die der SBC oder dem RCS AS zugehörige Fast-Route-Beziehung zu abonnieren; und
Empfangen einer Benachrichtigungsnachricht, die die von der CSCF gesendete Fast-Route-Beziehung trägt, und Speichern der empfangenen Fast-Route-Beziehung.

6. Verfahren nach Anspruch 1, wobei die Dienstinformationen umfassen: Benutzerinformationen entsprechend einem Dienst, einem Diensttyp und Dienstmerkmalen.

7. Verfahren nach Anspruch 1, wobei die Fast-Route-Informationen Routing-Sequenz-Informationen einer Fast-Route und Informationen über jedes Netzwerkelement auf einem Nachrichtenübermittlungspfad umfassen, wobei das Netzwerkelement eines umfasst von: der SBC, dem RCS AS oder einer Zusammenschaltung der Grenzkontrollfunktion (IBCF).

8. Verfahren zur Realisierung eines Signalisierungsroutings in einer Rich-Kommunikation, umfassend die folgenden Operationen, die von einer Anrufsitzungssteuerungsfunktion (CSCF) durchgeführt werden:
Extrahieren von Fast-Route-Informationen aus einer empfangenen Dienstantwort, die die Fast-Route-Informationen trägt; oder Bestimmen, nach einer Weiterleitungssituation einer Dienstanforderung und einer der Dienstanforderung entsprechenden Dienstantwort, der Fast-Route-Informationen, die der Dienstanforderung und der Dienstantwort entsprechen, wobei die Fast-Route-Informationen einen Nachrichtenübermittlungspfad angeben, über den eine nachfolgende Dienstanforderung oder eine nachfolgende Dienstantwort einer Sitzungsgrenzsteuerung (SBC) oder eines Rich-Kommunikationssuite-Anwendungsservers (RCS AS) übertragen wird, ohne durch die CSCF weitergeleitet zu werden;
Bestimmen einer Fast-Route-Beziehung zwischen Dienstinformationen und den Fast-Route-Informationen; und
Senden (S32) der Fast-Route-Beziehung an die entsprechende SBC oder den RCS AS.

9. Verfahren nach Anspruch 8, wobei das Senden (S32) der Fast-Route-Beziehung an eine entsprechende SBC oder einen RCS AS umfasst:
Senden einer Benachrichtigungsnachricht, die die abonnierten Fast Route-Beziehung trägt, an die SBC oder den RCS AS, der eine Abonnementanforderung sendet;
Senden einer aktualisierten Fast-Route-Beziehung durch die CSCF an die SBC oder den RCS AS, wenn sich die von der SBC oder dem RCS AS abonnierte Fast-Route-Beziehung verändert.

10. Verfahren nach Anspruch 8, wobei das Senden (S32) der Fast-Route-Beziehung an eine entsprechende SBC oder einen RCS AS umfasst:
Hinzufügen, zu einer an die SBC oder den RCS AS weiterzuleitenden Dienstanforderung oder Dienstantwort, der der Dienstanforderung oder der Dienstantwort entsprechenden Fast-Route-Informationen, und Weiterleiten der Dienstanforderung oder der Dienstantwort, die die Fast-Route-Informationen trägt, an die SBC oder den RCS AS; oder,
Hinzufügen der Fast-Route-Beziehung zu einer Dienstanforderung oder einer Dienstantwort, die an die SBC oder den RCS AS weitergeleitet werden soll, und Weiterleiten der Dienstanforderung oder der Dienstantwort, die die Fast-Route-Beziehung trägt, an die SBC oder den RCS AS.

11. Verfahren nach Anspruch 8, ferner umfassend mindestens eine der folgenden Operationen, die von der CSCF durchgeführt werden:
nach dem Empfangen einer Dienstanforderung oder einer Dienstantwort, die Fast-Route-Informationen trägt, Bestimmen, nach einer lokalen Fast-Route-Richtlinie, ob Fast-Route erlaubt ist, und in einem Fall des Bestimmens, dass Fast-Route nicht erlaubt ist, Löschen der getragenen Fast-Route-Informationen aus der Dienstanforderung oder der Dienstantwort und Weiterleiten der Dienstanforderung oder der Dienstantwort, die die Fast-Route-Informationen nicht trägt; und in einem Fall des Bestimmens, dass Fast-Route erlaubt ist, Weiterleiten der Dienstanforderung oder der Dienstantwort, die die Fast-Route-Informationen trägt; und
nach dem Empfangen einer Dienstanforderung oder einer Dienstantwort, die eine Anzeigeinformationen trägt, die anzeigen, dass Fast-Routing unterstützt wird, Bestimmen, nach einer lokalen Richtlinie für Fast-Routing, ob eine Fast-Route erlaubt ist; in einem Fall des Bestimmens, dass Fast-Routing nicht erlaubt ist, Löschen der getragenen Anzeigeinformationen, die anzeigen, dass Fast-Routing unterstützt wird, aus der Dienstanforderung oder der Dienstantwort, und Weiterleiten der Dienstanforderung oder der Dienstantwort, die die Anzeigeinformationen nicht trägt, die anzeigen, dass das Fast-Routing unterstützt wird; und in einem Fall des Bestimmens, dass Fast-Routing erlaubt ist, Weiterleiten der Dienstanforderung oder der Dienstantwort, die die Anzeigeinformationen trägt, die anzeigen, dass das Fast-Routing unterstützt wird.

12. Vorrichtung zur Realisierung von Signalisierungsrouting in einer Rich-Kommunikation, angewendet auf eine Sitzungsgrenzsteuerung, (SBC), oder einen Rich-Kommunikationssuite-Anwendungsserver (RCS AS) und umfassend:
ein Fast-Route-Verarbeitungsmodul (2101), das so konfiguriert ist, dass es in einer lokal gespeicherten Fast-Route-Beziehung zwischen Dienstinformationen und Fast-Route-Informationen nach Fast-Route-Informationen sucht, die einer empfangenen Dienstanforderung oder einer empfangenen Dienstantwort entsprechen, wobei die Fast-Route-Informationen einen Nachrichtenübermittlungspfad anzeigen, über den die empfangene Dienstanforderung oder die empfangene Dienstantwort übertragen wird, ohne durch eine Anrufsitzungssteuerungsfunktion(CSCF) weitergeleitet zu werden; und
ein Signalisierungsverarbeitungsmodul (2102), das so konfiguriert ist, dass es die Dienstanforderung oder die Dienstantwort nach den gefundenen Fast-Route-Informationen weiterleitet.

13. Vorrichtung zur Realisierung von Signalisierungsrouting in einer Rich-Kommunikation, angewendet auf eine Anrufsitzungssteuerungsfunktion (CSCF) und umfassend:
ein Informationserfassungsmodul, konfiguriert zum Extrahieren von Fast-Route-Informationen aus einer empfangenen Dienstantwort, die die Fast-Route-Informationen trägt; oder Bestimmen, nach einer Weiterleitungssituation einer Dienstanforderung und einer der Dienstanforderung entsprechenden Dienstantwort, der Fast-Route-Informationen, die der Dienstanforderung und der Dienstantwort entsprechen, wobei die Fast-Route-Informationen einen Nachrichtenübermittlungspfad angeben, über den eine nachfolgende Dienstanforderung oder eine nachfolgende Dienstantwort einer Sitzungsgrenzsteuerung (SBC) oder eines Rich-Kommunikationssuite-Anwendungsservers (RCS AS), übertragen wird, ohne durch eine Anrufsitzungssteuerungsfunktion (CSCF) weitergeleitet zu werden; und
ein Sendemodul, das so konfiguriert ist, dass es die Fast-Route-Beziehung an die entsprechenden SBC oder den RCS AS sendet.

14. Computerlesbares Speichermedium, das ein Computerprogramm speichert, das, wenn es ausgeführt wird, die Operationen des Verfahrens nach einem der Ansprüche 1 bis 7 implementiert.

15. Computerlesbares Speichermedium, das ein Computerprogramm speichert, das, wenn es ausgeführt wird, die Operationen des Verfahrens nach einem der Ansprüche 8 bis 11 implementiert.

## Revendications

1. Procédé permettant de réaliser un acheminement de signalisation dans une communication riche, comprenant les opérations suivantes exécutées par un dispositif de commande de session en périphérie, SBC, ou un serveur d'application de suite de communication riche, RCS AS :
la recherche (S11, S21), dans une relation d'itinéraire rapide mémorisée localement entre des informations de service et des informations d'itinéraire rapide, d'informations d'itinéraire rapide correspondant à une demande de service reçue ou à une réponse de service reçue, dans lequel les informations d'itinéraire rapide indiquent un trajet de livraison de message à travers lequel la demande de service reçue ou la réponse de service reçue est transmise sans être transférée par l'intermédiaire d'une fonction de commande de session d'appel, CSCF ; et
le transfert (S12, S22) de la demande de service ou de la réponse de service selon les informations d'itinéraire rapide trouvées.

2. Procédé selon la revendication 1, comprenant en outre les opérations suivantes exécutées par le SBC ou le RCS AS :
dans un cas où le SBC ou le RCS AS ne parvient pas à trouver, dans la relation d'itinéraire rapide, les informations d'itinéraire rapide correspondant à la demande de service ou à la réponse de service, l'ajout d'informations d'indication indiquant que l'acheminement rapide est pris en charge à la demande de service ou à la réponse de service, et le transfert de la demande de service ou de la réponse de service portant les informations d'indication indiquant que l'acheminement rapide est pris en charge à une fonction de commande de session d'appel, CSCF.

3. Procédé selon la revendication 1, comprenant en outre les opérations suivantes exécutées par le SBC ou le RCS AS :
l'ajout, après la réception d'une demande de service portant des informations d'indication indiquant que l'acheminement rapide est pris en charge transférée par une fonction de commande de session d'appel, CSCF, d'informations d'itinéraire rapide dans une réponse de service correspondant à la demande de service, et le renvoi, par le SBC ou le RCS AS, de la réponse de service portant les informations d'itinéraire rapide à la CSCF.

4. Procédé selon la revendication 1, comprenant en outre les opérations suivantes exécutées par le SBC ou le RCS AS :
l'extraction, après la réception d'une demande de service ou d'une réponse de service portant des informations d'itinéraire rapide, d'informations d'itinéraire rapide de la demande de service ou de la réponse de service, et la mémorisation des informations d'itinéraire rapide ; ou,
l'extraction, après la réception d'une demande de service ou d'une réponse de service portant une relation d'itinéraire rapide, de la relation d'itinéraire rapide de la demande de service ou de la réponse de service, et la mémorisation de la relation d'itinéraire rapide, dans lequel la relation d'itinéraire rapide est ajoutée à la demande de service ou à la réponse de service par la CSCF.

5. Procédé selon la revendication 1, comprenant en outre les opérations suivantes exécutées par le SBC ou le RCS AS :
l'envoi d'une demande d'abonnement à la CSCF pour s'abonner à la relation d'itinéraire rapide liée au SBC ou au RCS AS ; et
la réception d'un message de notification portant la relation d'itinéraire rapide envoyé par la CSCF, et la mémorisation de la relation d'itinéraire rapide reçue.

6. Procédé selon la revendication 1, dans lequel les informations de service comprennent : des informations utilisateur correspondant à un service, un type de service et des fonctionnalités de service.

7. Procédé selon la revendication 1, dans lequel les informations d'itinéraire rapide comprennent des informations de séquence d'acheminement d'un itinéraire rapide et des informations de chaque élément de réseau sur un trajet de livraison de message, dans lequel l'élément de réseau comprend l'un parmi : le SBC, le RCS AS ou une fonction de commande de périphérie d'interconnexion, IBCF.

8. Procédé permettant de réaliser un acheminement de signalisation dans une communication riche, comprenant les opérations suivantes exécutées par une fonction de commande de session d'appel, CSCF :
l'extraction d'informations d'itinéraire rapide à partir d'une réponse de service reçue portant les informations d'itinéraire rapide ; ou, la détermination, selon une situation de transfert d'une demande de service et d'une réponse de service correspondant à la demande de service, des informations d'itinéraire rapide correspondant à la demande de service et à la réponse de service, dans lequel les informations d'itinéraire rapide indiquent un trajet de livraison de message à travers lequel une demande de service ultérieure ou une réponse de service ultérieure d'un dispositif de commande de session en périphérie, SBC, ou d'un serveur d'application de suite de communication riche, RCS AS, est transmise sans être transférée par l'intermédiaire de la CSCF ;
la détermination d'une relation d'itinéraire rapide entre des informations de service et les informations d'itinéraire rapide ; et
la poussée (S32) de la relation d'itinéraire rapide vers le SBC ou le RCS AS correspondant.

9. Procédé selon la revendication 8, dans lequel la poussée (S32) de la relation d'itinéraire rapide vers un SBC ou un RCS AS correspondant comprend :
la poussée, vers le SBC ou le RCS AS envoyant une demande d'abonnement, d'un message de notification portant la relation d'itinéraire rapide souscrite ;
la poussée, par la CSCF, d'une relation d'itinéraire rapide mise à jour vers le SBC ou le RCS AS dans un cas où la relation d'itinéraire rapide souscrite par le SBC ou le RCS AS change.

10. Procédé selon la revendication 8, dans lequel la poussée (S32) de la relation d'itinéraire rapide vers un SBC ou un RCS AS correspondant comprend :
l'ajout, à une demande de service ou à une réponse de service à transférer au SBC ou au RCS AS, des informations d'itinéraire rapide correspondant à la demande de service ou à la réponse de service, et le transfert de la demande de service ou de la réponse de service portant les informations d'itinéraire rapide au SBC ou au RCS AS ; ou,
l'ajout de la relation d'itinéraire rapide à une demande de service ou à une réponse de service à transférer au SBC ou au RCS AS, et le transfert de la demande de service ou de la réponse de service portant la relation d'itinéraire rapide au SBC ou au RCS AS.

11. Procédé selon la revendication 8, comprenant en outre au moins l'une des opérations suivantes exécutées par la CSCF :
après la réception d'une demande de service ou d'une réponse de service portant des informations d'itinéraire rapide, selon une politique d'acheminement rapide locale, la détermination établissant si un itinéraire rapide est autorisé, et dans un cas où il est déterminé que l'itinéraire rapide n'est pas autorisé, la suppression des informations d'itinéraire rapide portées de la demande de service ou de la réponse de service, et le transfert de la demande de service ou de la réponse de service ne portant pas les informations d'itinéraire rapide ; et dans un cas où il est déterminé que l'itinéraire rapide est autorisé, le transfert de la demande de service ou de la réponse de service portant les informations d'itinéraire rapide ; et
après la réception d'une demande de service ou d'une réponse de service portant des informations d'indication indiquant que l'acheminement rapide est pris en charge, selon une politique d'acheminement rapide locale, la détermination établissant si l'itinéraire rapide est autorisé ; dans un cas où il est déterminé que l'acheminement rapide n'est pas autorisé, la suppression des informations d'indication portées indiquant que l'acheminement rapide est pris en charge de la demande de service ou de la réponse de service, et le transfert de la demande de service ou de la réponse de service ne portant pas les informations d'indication indiquant que l'acheminement rapide est pris en charge ; et dans un cas où il est déterminé que l'acheminement rapide est autorisé, le transfert de la demande de service ou de la réponse de service portant les informations d'indication indiquant que l'acheminement rapide est pris en charge.

12. Dispositif permettant de réaliser un acheminement de signalisation dans une communication riche, appliqué à un dispositif de commande de session en périphérie, SBC, ou à un serveur d'application de suite de communication riche, RCS AS, et comprenant :
un module de traitement d'itinéraire rapide (2101), configuré pour rechercher, dans une relation d'itinéraire rapide mémorisée localement entre des informations de service et des informations d'itinéraire rapide, des informations d'itinéraire rapide correspondant à une demande de service reçue ou à une réponse de service reçue, dans lequel les informations d'itinéraire rapide indiquent un trajet de livraison de message à travers lequel la demande de service reçue ou la réponse de service reçue est transmise sans être transférée par l'intermédiaire d'une fonction de commande de session d'appel, CSCF ; et
un module de traitement de signalisation (2102), configuré pour transférer la demande de service ou la réponse de service selon les informations d'itinéraire rapide trouvées.

13. Dispositif permettant de réaliser un acheminement de signalisation dans une communication riche, appliqué à une fonction de commande de session d'appel, CSCF, et comprenant :
un module d'acquisition d'informations, configuré pour extraire des informations d'itinéraire rapide d'une réponse de service reçue portant les informations d'itinéraire rapide ; ou, pour déterminer, selon une situation de transfert d'une demande de service et d'une réponse de service correspondant à la demande de service, les informations d'itinéraire rapide correspondant à la demande de service et à la réponse de service, dans lequel les informations d'itinéraire rapide indiquent un trajet de livraison de message à travers lequel une demande de service ultérieure ou une réponse de service ultérieure d'un dispositif de commande de session en périphérie, SBC, ou d'un serveur d'application de suite de communication riche, RCS AS, est transmise sans être transférée par l'intermédiaire d'une fonction de commande de session d'appel CSCF ; et
un module de poussée, configuré pour pousser la relation d'itinéraire rapide vers le SBC ou le RCS AS correspondant.

14. Support de mémoire lisible par ordinateur, mémorisant un programme d'ordinateur, lequel, lorsqu'il est exécuté, implémente les opérations du procédé selon l'une quelconque des revendications 1 à 7.

15. Support de mémoire lisible par ordinateur, mémorisant un programme d'ordinateur, lequel, lorsqu'il est exécuté, implémente les opérations du procédé selon l'une quelconque des revendications 8 à 11.
